# EUROPEAN PATENT APPLICATION

(11) **EP 4 598 229 A1**
(43) Date of publication of application: **06.08.2025**
(21) Application number: 23872959.4
(22) Date of filing: 21.09.2023
(51) Int. Cl.: H04W 72/25, H04W 72/04, H04L 5/00, H04W 24/08, H04W 74/08, H04W 92/18, H04W 72/12

(54) **SCHEDULING METHOD AND APPARATUS FOR COMMUNICATION BETWEEN TERMINALS OF COMMUNICATION SYSTEM**

(30) Priority: 29.09.2022 KR 20220124619; 04.11.2022 KR 20220146122; 07.04.2023 KR 20230046256; 25.07.2023 KR 20230096615; 28.08.2023 KR 20230112848
(71) Applicant: Electronics and Telecommunications Research Institute, Daejeon 34129 (KR)
(72) Inventor: UM, Jung Sun, Daejeon 34129 (KR); PARK, Sung Ik, Daejeon 34129 (KR); JUNG, Hoi Yoon, Daejeon 34129 (KR); HUR, Nam Ho, Daejeon 34129 (KR)
(74) Representative: Betten & Resch
(86) International application number: PCT/KR2023/014422
(87) International publication number: WO 2024/071842

(57) **Abstract**

The present invention relates to a scheduling technology for communication between terminals of a communication system. Provided may be a method for a first terminal, comprising the steps of: configuring, in a resource pool of sidelink, resource block (RB) sets in units obtained by adding a protection band to a listen-before-talk (LBT) bandwidth; configuring a subchannel including two or more physical resource blocks (PRBs) from among a plurality of PRBs included in each of the RB sets; generating sidelink control information including identification information of scheduled at least one subchannel from among a plurality of subchannels configured in the RB sets; and transmitting the sidelink control information to a second terminal.

## Description

### [Technical Field]

The present disclosure relates to a scheduling technique for communication between terminals in a communication system, and more particularly, to a scheduling technique for communication between terminals in a communication system, which enables scheduling by configuring transmission resources in consideration of a channel occupancy and an occupied bandwidth of an unlicensed band.

### [Background Art]

With the development of information and communication technology, various wireless communication technologies have been developed. Typical wireless communication technologies include long term evolution (LTE) and new radio (NR), which are defined in the 3rd generation partnership project (3GPP) standards. The LTE may be one of 4th generation (4G) wireless communication technologies, and the NR may be one of 5th generation (5G) wireless communication technologies.

For the processing of rapidly increasing wireless data after the commercialization of the 4th generation (4G) communication system (e.g., Long Term Evolution (LTE) communication system or LTE-Advanced (LTE-A) communication system), the 5th generation (5G) communication system (e.g., new radio (NR) communication system) that uses a frequency band (e.g., a frequency band of 6 GHz or above) higher than that of the 4G communication system as well as a frequency band of the 4G communication system (e.g., a frequency band of 6 GHz or below) is being considered. The 5G communication system may support enhanced Mobile BroadBand (eMBB), Ultra-Reliable and Low-Latency Communication (URLLC), and massive Machine Type Communication (mMTC).

Meanwhile, in a communication system, a terminal and a terminal may transmit or receive data using a sidelink (SL). The sidelink may be configured in an unlicensed band. The terminal may identify a channel occupancy status of radio resources in order to transmit data through the sidelink of the unlicensed band. In this case, a radio resource that the terminal wants to use may already be occupied by another terminal. In this situation, the terminal cannot transmit signals using the radio resource. Therefore, in order to smoothly transmit signals from the terminal, the communication system may configure and schedule transmission resources by considering a channel occupancy and an occupied bandwidth of the unlicensed band.

Matters described as the prior arts are prepared to promote understanding of the background of the present disclosure, and may include matters that are not already known to those of ordinary skill in the technology domain to which exemplary embodiments of the present disclosure belong.

### [Disclosure]

### [Technical Problem]

The present disclosure is directed to providing a scheduling method and apparatus for communication between terminals in a communication system, which enable scheduling by configuring transmission resources in consideration of a channel occupancy and an occupied bandwidth of an unlicensed band.

### [Technical Solution]

A scheduling method for communication between terminals in a communication system, according to a first exemplary embodiment of the present disclosure for achieving the above-described objective, may comprise, as a method of a first terminal, configuring resource block (RB) sets each of which corresponds to a unit in which a listen-before-talk (LBT) bandwidth and a guard band are combined from a sidelink resource pool; configuring a subchannel including two or more physical resource blocks (PRBs) from among a plurality of PRBs included in each of the RB sets; generating sidelink control information including identification information of at least one scheduled subchannel among a plurality of subchannels configured in the RB sets; and transmitting the sidelink control information to a second terminal.

The method may further comprise: receiving, from a base station, information on the guard band, which includes at least one of information on index(es) of PRB(s) of the guard band or information on a number of the PRB(s) of the guard band in the resource pool; and identifying a subchannel including the guard band based on the information on the guard band.

The method may further comprise, when the information on the guard band further includes information a number N_{GB} of PRBs included in the guard band, when each of the RB sets includes N_{subch} subchannels, configuring PRBs included in subchannels indexed from 0 to (N_{subch} - N_{GB} - 1) to be used for transmission; configuring one PRB in each of subchannels indexed from (N_{subch}-N_{GB}) to (N_{subch}-1) to be used as the guard band; configuring the one PRB in each of the subchannels indexed from (N_{subch}-N_{GB}) to (N_{subch}-1) not to be used for transmission; and calculating a transport block size (TBS) by considering the one PRB not used for transmission.

When a number of the PRBs excluded from the transmission is equal to or more than a predetermined number, the number of the PRBs excluded from the transmission may be considered in calculating the TBS.

When the at least one scheduled subchannel is included in each of at least one RB set, the sidelink control information may further include information on whether to use the guard band for transmission.

When the at least one scheduled subchannel is included in each of at least one RB set, the first terminal may assume that data is transmitted as being punctured at PRB(s) of the guard band.

The method may further comprise: performing a listen-before-talk (LBT) operation before transmitting a signal in a first slot of the at least one scheduled subchannel; in response to that the LBT operation succeeds, transmitting a signal to the second terminal based on a first transmission time in the first slot; and in response to that the LBT operation fails, transmitting a signal to the second terminal based on a second transmission time in the first slot, wherein the first transmission time is a time of a symbol index indicated by sidelink start symbol information, and the second transmission time is a time obtained by adding an offset to the time of the symbol index indicated by the sidelink start symbol information.

The method may further comprise: receiving, from a base station, information on a plurality of candidate start symbols; and configuring information on a start symbol dynamically indicated by the base station from among the plurality of candidate start symbols as the sidelink start symbol information.

The second transmission time may be at least one of a start time of transmission including an automatic gain control (AGC) symbol, a start time of a physical sidelink control channel (PSCCH)/physical sidelink shared channel (PSSCH), or a start time of an AGC symbol.

The method may further comprise determining a TBS by considering at least one of a sidelink symbol length, a number of physical sidelink feedback channel (PSFCH) symbols, a number of demodulation reference signal (DMRS) resource elements (REs), or a number of overhead REs.

When transmitting a second DMRS at the second transmission time, the first terminal may transmit the second DMRS at a time obtained by adding an offset to a transmission time of the first DMRS transmitted at the first transmission time.

A scheduling apparatus for communication between terminals in a communication system, according to a first exemplary embodiment of the present disclosure for achieving the above-described objective, may comprise, as a first terminal, a processor, and the processor may cause the first terminal to perform: configuring resource block (RB) sets each of which corresponds to a unit in which a listen-before-talk (LBT) bandwidth and a guard band are combined from a sidelink resource pool; configuring a subchannel including two or more physical resource blocks (PRBs) from among a plurality of PRBs included in each of the RB sets; generating sidelink control information including identification information of at least one scheduled subchannel among a plurality of subchannels configured in the RB sets; and transmitting the sidelink control information to a second terminal.

The processor may further cause the first terminal to perform: receiving, from a base station, information on the guard band, which includes at least one of information on index(es) of PRB(s) of the guard band or information on a number of the PRB(s) of the guard band in the resource pool; and identifying a subchannel including the guard band based on the information on the guard band.

The information on the guard band may further include information a number N_{GB} of PRBs included in the guard band, and the processor may further cause the first terminal to perform: when each of the RB sets includes N_{subch} subchannels, configuring PRBs included in subchannels indexed from 0 to (N_{subch} - N_{GB} - 1) to be used for transmission; configuring one PRB in each of subchannels indexed from (N_{subch}-N_{GB}) to (N_{subch}-1) to be used as the guard band; configuring the one PRB in each of the subchannels indexed from (N_{subch}-N_{GB}) to (N_{subch}-1) not to be used for transmission; and calculating a transport block size (TBS) by considering the one PRB not used for transmission.

The processor may further cause the first terminal to perform: performing a listen-before-talk (LBT) operation before transmitting a signal in a first slot of the at least one scheduled subchannel; in response to that the LBT operation succeeds, transmitting a signal to the second terminal based on a first transmission time in the first slot; and in response to that the LBT operation fails, transmitting a signal to the second terminal based on a second transmission time in the first slot, wherein the first transmission time is a time of a symbol index indicated by sidelink start symbol information, and the second transmission time is a time obtained by adding an offset to the time of the symbol index indicated by the sidelink start symbol information.

The processor may further cause the first terminal to perform: receiving, from a base station, information on a plurality of candidate start symbols; and configuring information on a start symbol dynamically indicated by the base station from among the plurality of candidate start symbols as the sidelink start symbol information.

The first terminal may transmit a signal in a transmission resource of a guard symbol at a position obtained by adding 1 to a sidelink symbol length, when transmission continues in a second slot which is a next slot of the first slot.

The first terminal may inform the second terminal through the sidelink control information whether to use the guard symbol at the position obtained by adding 1 to the sidelink symbol length.

### [Advantageous Effects]

According to the present disclosure, in sidelink communication, the terminal can control and manage a transmission time or transmission opportunity by adding it temporally according to a result of determining a channel occupancy status. Additionally, according to the present disclosure, the terminal can define a bandwidth and subchannel configuration divided by the determined channel occupancy status when configuring frequency domain resources. Additionally, according to the present disclosure, the transmitting terminal and the receiving terminal can use slots that cannot be used for transmission according to a result of listen-before-talk (LBT) operation by using a defined structure of transmission resources.

### [Description of Drawings]

FIG. 1 is a conceptual diagram illustrating a first exemplary embodiment of a communication system.
FIG. 2 is a block diagram illustrating an exemplary embodiment of a communication node constituting a communication system.
FIG. 3 is a conceptual diagram illustrating a first exemplary embodiment of a system frame in a communication system.
FIG. 4 is a conceptual diagram illustrating a first exemplary embodiment of a subframe in a communication system.
FIG. 5 is a conceptual diagram illustrating a first exemplary embodiment of a slot in a communication system.
FIG. 6 is a conceptual diagram illustrating a second exemplary embodiment of a slot in a communication system.
FIG. 7 is a conceptual diagram illustrating a first exemplary embodiment of a time-frequency resource in a communication system.
FIG. 8 is a conceptual diagram illustrating a first exemplary embodiment of configuration of a resource pool, SL signals, and SL channels within an SL bandwidth part (BWP).
FIG. 9 is a conceptual diagram illustrating a first exemplary embodiment of SL resources.
FIG. 10 is a conceptual diagram illustrating a first exemplary embodiment of a channel occupancy time in a communication system.
FIG. 11 is a conceptual diagram illustrating a second exemplary embodiment of a channel occupancy time in a communication system.
FIG. 12 is a conceptual diagram illustrating a first exemplary embodiment of RB sets and subchannels.
FIG. 13 is a conceptual diagram illustrating a first exemplary embodiment of a transmission time.
FIG. 14 is a conceptual diagram illustrating a first exemplary embodiment of time domain symbol configuration.
FIG. 15 is a conceptual diagram illustrating a second exemplary embodiment of time domain symbol configuration.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

A wireless communication network to which exemplary embodiments according to the present disclosure are applied will be described. The wireless communication network to which the exemplary embodiments according to the present disclosure are applied is not limited to the content described below, and the exemplary embodiments according to the present disclosure may be applied to various wireless communication networks. Here, a wireless communication network may be used in the same sense as a wireless communication system.

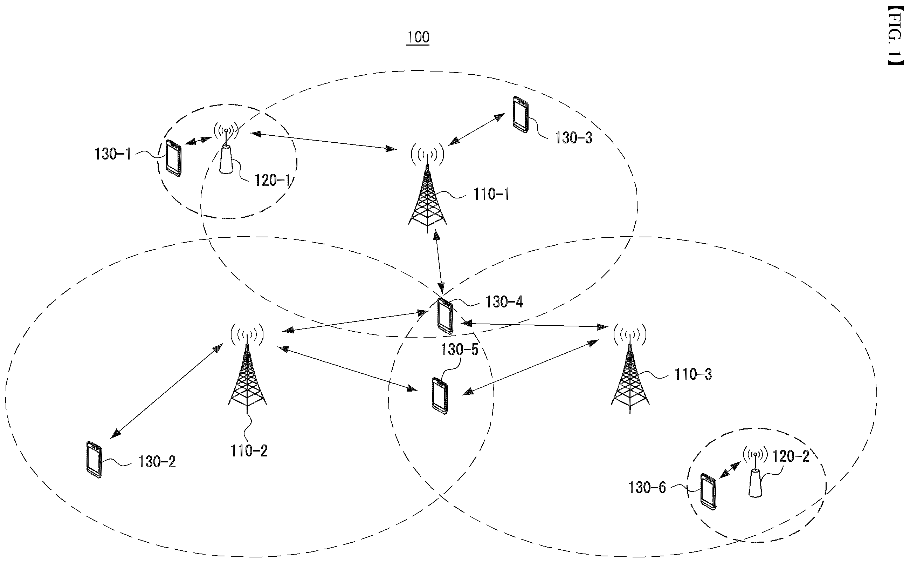

FIG. 1 is a conceptual diagram illustrating a first exemplary embodiment of a communication system.

Referring to FIG. 1, a communication system 100 may comprise a plurality of communication nodes 110-1, 110-2, 110-3, 120-1, 120-2, 130-1, 130-2, 130-3, 130-4, 130-5, and 130-6. Here, the communication system may be referred to as a 'communication network'. Each of the plurality of communication nodes may support code division multiple access (CDMA) based communication protocol, wideband CDMA (WCDMA) based communication protocol, time division multiple access (TDMA) based communication protocol, frequency division multiple access (FDMA) based communication protocol, orthogonal frequency division multiplexing (OFDM) based communication protocol, orthogonal frequency division multiple access (OFDMA) based communication protocol, single-carrier FDMA (SC-FDMA) based communication protocol, non-orthogonal multiple access (NOMA) based communication protocol, space division multiple access (SDMA) based communication protocol, or the like. Each of the plurality of communication nodes may have the following structure.

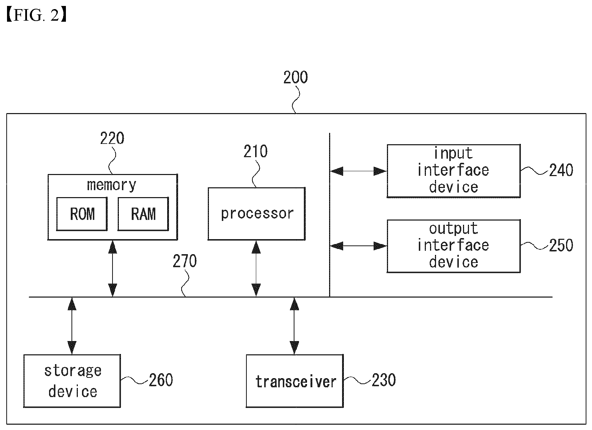

FIG. 2 is a block diagram illustrating an exemplary embodiment of a communication node constituting a communication system.

Referring to FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270. However, each component included in the communication node 200 may be connected to the processor 210 via an individual interface or a separate bus, rather than the common bus 270. For example, the processor 210 may be connected to at least one of the memory 220, the transceiver 230, the input interface device 240, the output interface device 250, and the storage device 260 via a dedicated interface.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of user equipments (UEs) 130-1, 130-2, 130-3, 130-4, 130-5, and 130-6. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, a evolved Node-B (eNB), a base transceiver station (BTS), a radio base station, a radio transceiver, an access point, an access node, a road side unit (RSU), a digital unit (DU), a cloud digital unit (CDU), a radio remote head (RRH), a radio unit (RU), a transmission point (TP), a transmission and reception point (TRP), a relay node, or the like. Here, each of the plurality of terminals 130-1, 130-2, 130-3, 130-4, 130-5, and 130-6 may refer to a user equipment (UE), a terminal, an access terminal, a mobile terminal, a station, a subscriber station, a mobile station, a portable subscriber station, a node, a device, or the like.

Each of the plurality of communication nodes 110-1, 110-2, 110-3, 120-1, 120-2, 130-1, 130-2, 130-3, 130-4, 130-5, and 130-6 may support cellular communication (e.g., long term evolution (LTE), LTE-Advanced (LTE-A), or the like specified in the 3rd generation partnership project (3GPP)). The plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding UE 130-1, 130-2, 130-3, 130-4, 130-5, or 130-6, and transmit a signal received from the corresponding UE 130-1, 130-2, 130-3, 130-4, 130-5, or 130-6 to the core network.

Each of the plurality of base stations 110-1, 110-2, 110-3, 120-1, and 120-2 may support OFDMA-based downlink transmission and SC-FDMA-based uplink transmission. In addition, each of the plurality of base stations 110-1, 110-2, 110-3, 120-1, and 120-2 may support multi-input multi-output (MIMO) transmission (e.g., a single-user MIMO (SU-MIMO), multi-user MIMO (MU-MIMO), massive MIMO, or the like), coordinated multipoint (CoMP) transmission, carrier aggregation (CA) transmission, transmission in an unlicensed band, device-to-device (D2D) communications (or, proximity services (ProSe)), or the like. Here, each of the plurality of UEs 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2.

Hereinafter, operation methods of a communication node in a wireless communication network will be described. Even when a method (e.g., transmission or reception of a signal) performed at a first communication node among communication nodes is described, the corresponding second communication node may perform a method (e.g., reception or transmission of the signal) corresponding to the method performed at the first communication node. That is, when an operation of a terminal is described, a corresponding base station may perform an operation corresponding to the operation of the terminal. Conversely, when an operation of a base station is described, a corresponding terminal may perform an operation corresponding to the operation of the base station.

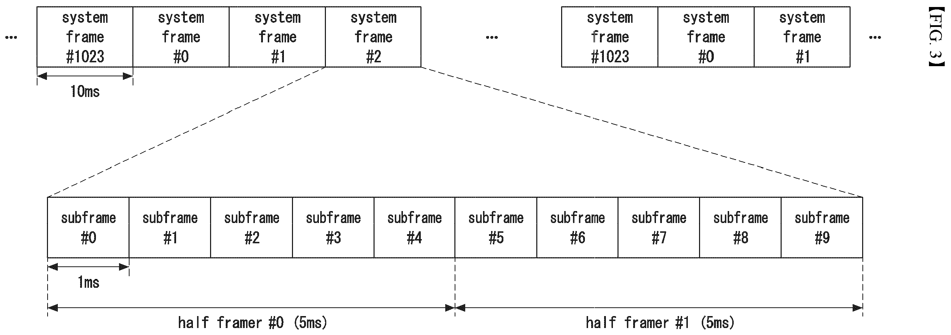

FIG. 3 is a conceptual diagram illustrating a first exemplary embodiment of a system frame in a communication system.

Referring to FIG. 3, time resources in the communication system may be divided on a frame basis. For example, system frames of the communication system may be configured continuously in the time domain. The length of the system frame may be 10 millisecond (ms). A system frame number (SFN) may be set to one of #0 to #1023. In this case, 1024 system frames may be repeated on the time domain of the communication system. For example, an SFN of a system frame after the system frame #1023 may be #0.

One system frame may include two half frames. The length of one half frame may be 5 ms. A half frame located at a starting region of the system frame may be referred to as 'half frame #0', and a half frame located at an ending region of the system frame may be referred to as 'half frame #1'. One system frame may include 10 subframes. The length of one subframe may be 1 ms. 10 subframes within one system frame may be referred to as subframes #0-#9.

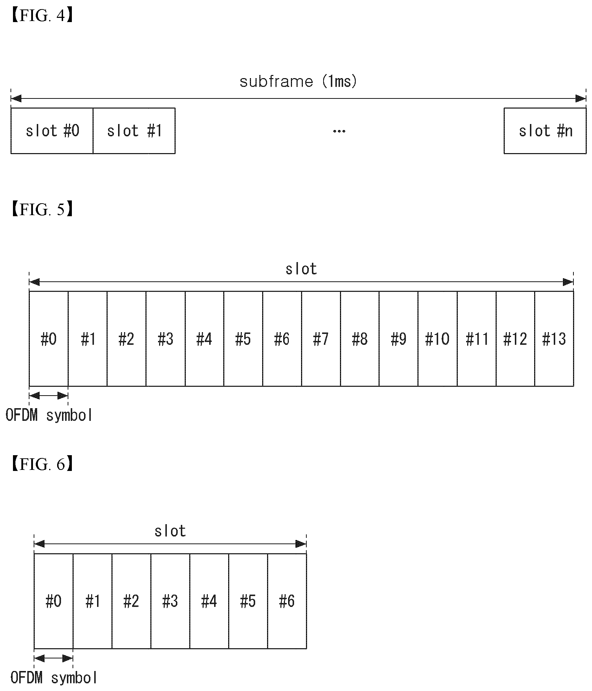

FIG. 4 is a conceptual diagram illustrating a first exemplary embodiment of a subframe in a communication system.

Referring to FIG. 4, one subframe may include n slots, and n may be a natural number. Accordingly, one subframe may consist of one or more slots.

FIG. 5 is a conceptual diagram illustrating a first exemplary embodiment of a slot in a communication system.

Referring to FIG. 5, one slot may include one or more symbols. For example, one slot may include 14 symbols.

FIG. 6 is a conceptual diagram illustrating a second exemplary embodiment of a slot in a communication system.

Referring to FIG. 6, one slot may include one or more symbols. For example, one slot may include 7 symbols.

The length of slot in FIGS. 5 and 6 may vary according to the number of symbols included in a slot and the length of symbol. Alternatively, the length of slot may vary according to a numerology µ. Here, µ may be a positive integer or 0. When a subcarrier spacing is 15 kHz (e.g., µ = 0), the length of slot may be 1 ms. In this case, one system frame may include 10 slots. When a subcarrier spacing is 30 kHz (e.g., µ = 1), the length of slot may be 0.5 ms. In this case, one system frame may include 20 slots.

When a subcarrier spacing is 60 kHz (e.g., µ = 2), the length of slot may be 0.25 ms. In this case, one system frame may include 40 slots. When a subcarrier spacing is 120 kHz (e.g., µ = 3), the length of slot may be 0.125 ms. In this case, one system frame may include 80 slots. When a subcarrier spacing is 240 kHz (e.g., µ = 4), the length of slot may be 0.0625 ms. In this case, one system frame may include 160 slots.

The symbol may be configured as a downlink (DL) symbol, flexible (FL) symbol, or uplink (UL) symbol. A slot composed of only DL symbols may be referred to as a 'DL slot', a slot composed of only FL symbols may be referred to as a 'FL slot', and a slot composed of only UL symbols may be referred to as a 'UL slot'.

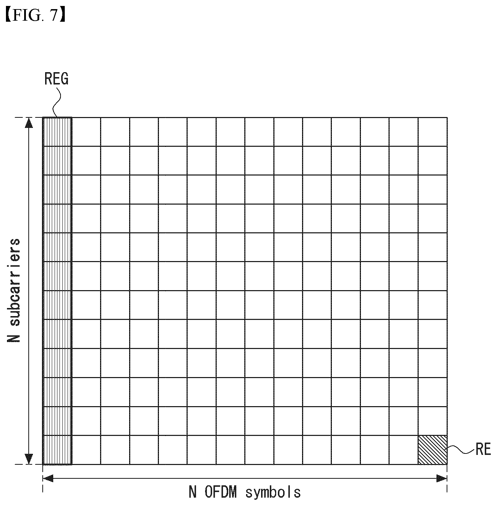

FIG. 7 is a conceptual diagram illustrating a first exemplary embodiment of a time-frequency resource in a communication system.

Referring to FIG. 7, a resource composed of one OFDM symbol on the time axis and one subcarrier on the frequency axis may be defined as a 'resource element (RE)'. A resource composed of one OFDM symbol on the time axis and K subcarriers on the frequency axis may be defined as a 'resource element group (REG)'. The REG may include K REs. The REG may be used as a basic unit of resource allocation in the frequency domain. K may be a natural number. For example, K may be 12. N may be a natural number. In the slot shown in FIG. 5, N may be 14. N OFDM symbols may be used as a basic unit of resource allocation in the time domain.

Hereinafter, methods for transmitting and receiving data in a communication network will be described. In downlink communication, downlink data may be transmitted through a PDSCH. In uplink communication, uplink data may be transmitted through a PUSCH. In the present disclosure, a PDSCH may refer to downlink data or a resource through which the downlink data is transmitted and received, and a PUSCH may refer to uplink data or a resource through which the uplink data is transmitted and received. The base station may transmit downlink control information (DCI) including configuration information (e.g., resource allocation information, scheduling information) of a PDSCH through a physical downlink control channel (PDCCH). In the present disclosure, a PDCCH may refer to DCI (e.g., control information) or a resource through which the DCI is transmitted.

The terminal may receive the DCI on the PDCCH and identify the configuration information of the PDSCH included in the DCI. For example, the configuration information of the PDSCH may include time domain resource assignment (TDRA), frequency domain resource assignment (FDRA), and/or modulation and coding scheme (MCS) information. The TDRA may indicate a resource region of the PDSCH in the time domain. The FDRA may indicate a resource region of the PDSCH in the frequency domain. The MCS information may indicate an MCS level or MCS index.

Sidelink (SL) communication methods in a communication network will be described. SL communication may be performed in a licensed band and/or unlicensed band. SL communication in an unlicensed band may be referred to as sidelink-unlicensed (SL-U) communication or unlicensed-sidelink (U-SL) communication. SL resources may be used for transmission of SL signals and/or channels. SL resources nay be configured on a resource pool basis. A resource pool may be referred to as an SL resource pool. The resource pool may include a Tx resource pool and/or an Rx resource pool. The Tx resource pool may be used for SL transmission, and the Rx resource pool may be used for SL reception. The Tx resource pool and Rx resource pool may be distinguished from each other. The Tx resource pool and Rx resource pool may be configured independently.

In the time domain, a resource pool may include one or more slots, and in the frequency domain, a resource pool may include one or more subchannels. One subchannel may include N_{PRB} physical resource blocks (PRBs). N_{PRB} may be one of 10, 12, 15, 20, 25, 50, 75, or 100. The resource pool may be configured periodically. For example, a resource pool may be configured at a periodicity of 10240 milliseconds (ms) in the time domain. Among all slots belonging to a period corresponding to the periodicity of 10240ms, some slots may be configured as a resource pool. Depending on a time division duplex (TDD) configuration, slot(s) including downlink (DL) symbol(s) may not be configured as a resource pool. Slot(s) including resource(s) in which a sidelink-synchronization signal block (S-SSB) is transmittable may not be configured as a resource pool. Slot(s) configurable as a resource pool may be defined by a bitmap. In other words, the bitmap may indicate slot(s) configurable as a resource pool.

Meanwhile, sidelink (SL) channels may be as follows. In other words, a sidelink channel may deliver traffic, data, etc. related to sidelink services. Alternatively, a sidelink channel may deliver control information related to sidelink management and scheduling.

The SL channels may be used for transmission and reception of traffic (e.g., data), management information, and/or control information (e.g., control information related to scheduling) related to SL services. The SL channels may include Physical Sidelink Broadcast Channel (PSBCH), Physical Sidelink Shared Channel (PSSCH), Physical Sidelink Control Channel (PSCCH), and/or Physical Sidelink Feedback Channel (PSFCH). SL signals may include synchronization signals (e.g., sidelink-primary synchronization signal (S-PSS), sidelink-secondary synchronization signal (S-SSS)) and/or reference signals (e.g., demodulation reference signal (DMRS), channel state information-reference signal (CSI-RS), phase tracking (PT)-RS, and/or positioning reference signal (PRS).

The PSSCH may be a channel used for transmission and reception of a transport block (TB), data, and/or traffic. The PSCCH may be a channel used for transmission and reception of control information. The PSFCH may be a channel used for transmission and reception of hybrid automatic repeat request (HARQ) feedback indicating a PSSCH reception status. A sidelink-synchronization signal block (S-SSB) may include at least one of the PSBCH, S-PSS, or S-SSS. The S-SSB may further include a DMRS. Synchronization between terminals may be performed using the synchronization signals (e.g., S-PSS and/or S-SSS).

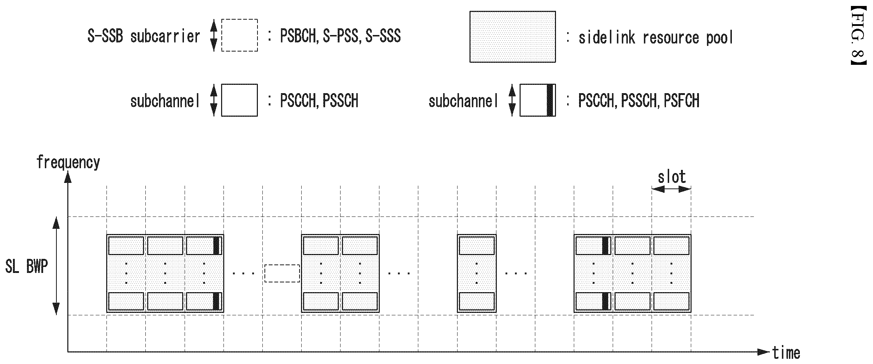

FIG. 8 is a conceptual diagram illustrating a first exemplary embodiment of configuration of a resource pool, SL signals, and SL channels within an SL bandwidth part (BWP).

Referring to FIG. 8, a resource pool may include one or more slots excluding slot(s) that do not meet a configuration condition of the resource pool and/or slot(s) not indicated by a bitmap among a plurality of slots. Non-consecutive slots in the time domain may be interpreted as consecutive slots within the resource pool. In other words, even when the slots configured as the resource pool are not consecutive, indexes of the slots within the resource pool may be consecutive.

In the present disclosure, SL resources (e.g., SL transmission resources) may refer to resources within the resource pool. SL resources may refer to resources for transmission of SL signals and/or SL channels. In the present disclosure, signal transmission may refer to transmission of an SL signal and/or SL channel, and signal reception may refer to reception of an SL signal and/or SL channel. 'Signal' may be interpreted as 'signal' or 'signal + channel', and 'channel' may be interpreted as 'channel' or 'channel + signal'. 'SL signal/channel' may be interpreted as 'SL signal', 'SL channel', or 'SL signal + SL channel'.

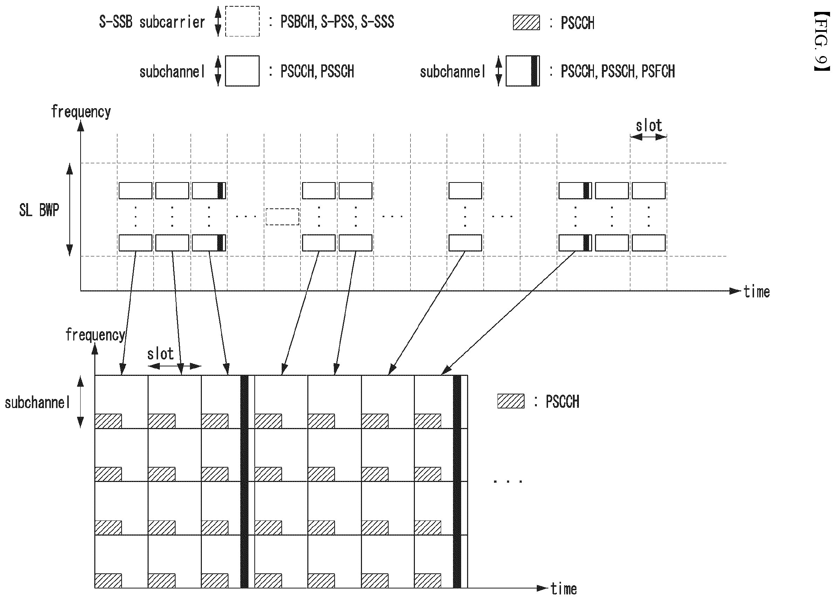

FIG. 9 is a conceptual diagram illustrating a first exemplary embodiment of SL resources.

Referring to FIG. 9, a basic transmission unit of an SL signal/channel in the time domain may be one slot, and a basic transmission unit of an SL signal/channel in the frequency domain may be one subchannel. A transmission resource of an SL signal/channel may include one or more slots and/or one or more subchannels. A transmission resource may include a PSCCH and/or PSSCH. Additionally, a transmission resource may include a PSFCH. A slot (e.g., slot position) including PSFCH(s) may be predefined. A slot including PSFCH(s) may be referred to as a PSFCH slot. A condition for configuring a PSFCH slot in a licensed band may be different from a condition for configuring a PSFCH slot in an unlicensed band. An HARQ feedback transmission operation in a PSFCH slot of a licensed band may be different from an HARQ feedback transmission operation in a PSFCH slot of an unlicensed band. Configuration information of an SL channel actually transmitted in a transmission resource may be transmitted through signaling (e.g., RRC message, SCI). The configuration information of the SL channel may include frequency resource information (e.g., position of a frequency resource region), time resource information (e.g., position of a time resource region), and the like.

In an exemplary embodiment, OFDM symbols available for signal transmission within a slot of a basic transmission unit may be defined according to an SL-start symbol (e.g., *sl-StartSymbol*) and an SL-symbol length (e.g., *sl-LengthSymbols*)*.* Here, when a sidelink is configured in an unlicensed band, a subslot with a time length smaller than a slot length or OFDMA symbols of an arbitrary length may be used as OFDM symbols for signal transmission. In an exemplary embodiment, OFDM symbols that can be used for signal transmission within a slot of a basic transmission unit may be defined according to an RRC message including *sl-LengthSymbols.* Alternatively, in another exemplary embodiment, related information may be included in SCI.

In case of sidelink subchannels, one subchannel may be configured with consecutive N_{PRB4subchannel} PRB(s). Here, N_{PRB4subchannel} may be defined by an RRC message or base station. The respective subchannels may be configured consecutively within the resource pool. When a sidelink is configured in an unlicensed band, a subchannel may be configured as a set of physically distributed PRBs. As an example, a subchannel may be configured with N_{PRB4subchannel} PRB(s) at regular PRB intervals. In the present disclosure, a structure of the subchannel configured as a set of PRBs at regular intervals may be defined as an 'interlace subchannel'.

A base station may transmit configuration information (e.g., transmission resource information) of SL channel(s) to the terminal. The terminal may receive the configuration information of the SL channel(s) from the base station and transmit the SL channel(s) based on the configuration information (e.g., transmission resource(s) indicated by the configuration information). Alternatively, the terminal may select resource(s) by performing a resource sensing operation and/or a resource selection operation, and may transmit SL channel(s) on the selected resource(s). The selected resource(s) may mean transmission resource(s). A transmission resource may include one or more subchannels and one or more slots.

A transmitting terminal may transmit an SCI including transmission resource information (e.g., scheduling information) of a PSSCH to a receiving terminal. The transmission resource information may be allocation information of subchannel(s) and/or slot(s) of the PSSCH. The transmitting terminal may refer to a terminal that transmits the PSSCH (e.g., data). The receiving terminal may refer to a terminal that receives the PSSCH (e.g., data). The transmission resource information included in the SCI may indicate a transmission resource of the PSSCH in a slot where the SCI is transmitted. Alternatively, the transmission resource information included in the SCI may indicate a transmission resource of the PSSCH in a slot other than the slot where the SCI is transmitted.

In SL-U communication, a listen-before-talk (LBT) operation may be performed for coexistence with other communication nodes (e.g., communication devices). Actual transmission resource(s) may be determined based on a result of the LBT operation. A terminal may perform an LBT operation, and if the LBT operation is successful, the terminal may use a channel during a specific time (e.g., channel occupancy time (COT)). For example, if the LBT operation of the terminal is successful, a COT may be initiated by the terminal, and the terminal may perform communication (e.g., SL-U communication) during the COT. Depending on a specific condition, other terminals (e.g., terminals not initiating the COT) may perform communication (e.g., SL-U communication) during the COT. In other words, the COT may be shared with other terminal(s), and in this case, the other terminal(s) may perform communication within the shared COT.

A transmission unit (e.g., symbol configuration) within the COT may vary. Configuration information of a transmission unit within the COT may be transmitted through signaling (e.g., SCI). A symbol may refer to an OFDM symbol. In the exemplary embodiment of FIG. 9, a PSCCH and PSSCH may be configured together within a transmission resource. The PSCCH may be configured starting from a PRB with the lowest index in a subchannel with the lowest index among subchannel(s) configured for PSSCH transmission.

The number of OFDM symbols used for PSCCH configuration may be 2 or 3. In this case, a start position of the OFDM symbols used for PSCCH configuration may be defined as an index [SL-start symbol (e.g., *sl-StartSymbol*) *+* 1].

Operations, procedures, control information, and/or configuration information for operating channel occupancy in SL-U communication will be described. An operating channel may refer to a frequency resource having a bandwidth of a predefined size. Resources (e.g., time resources, frequency resources, carriers, subcarriers, subchannels) of an unlicensed band may be occupied by a communication node belonging to a network (e.g., wireless local area network (WLAN)) other than a cellular network (e.g., 4G network, 5G network). Resources of an unlicensed band may be occupied by signals/channels transmitted and received between a base station and a terminal belonging to the cellular network. Resources of an unlicensed band may be occupied by signals/channels transmitted and received between terminals belonging to the cellular network.

In the present disclosure, a communication node (e.g., base station, terminal) transmitting a signal/channel may be expressed as a transmitting node, and a communication node (e.g., base station, terminal) receiving the signal/channel may be expressed as a receiving node. In an unlicensed band, communication nodes may share an operating channel. LBT operations may be performed to minimize interference between the communication nodes. The LBT operation may include an operation of checking whether the operating channel is occupied by another signal before transmitting a signal/channel. If the LBT operation is supported, a communication node (e.g., transmitting node) may perform a random backoff procedure.

If the LBT operation is successful, the communication node may occupy the operating channel. Occupation of the operating channel may be referred to as channel occupancy (CO). A terminal may secure a CO by performing an LBT operation. Configuration of the CO may vary depending on the type of LBT operation performed by the terminal. For example, the maximum length of CO may vary depending on the type of LBT operation performed by the terminal. The type of LBT operation performed by the terminal may vary depending on a priority class of data the terminal wishes to transmit within the CO.

The terminal may perform an LBT operation using different parameters (e.g., different LBT parameters) to obtain a CO corresponding to each priority class. When an LBT operation is performed according to a priority class, parameters that determine an execution time of the LBT operation may vary. In an LBT operation involving a random backoff procedure, the minimum and/or maximum size of a contention window (CW) may be set differently for each priority class. The terminal may select a random backoff counter within the CW and perform a random backoff procedure based on the selected random backoff counter.

A fixed time period during which the LBT operation is performed may be determined based on the type of LBT operation and/or LBT parameter(s). The length of the fixed time period may be 16 µs or 25 µs.

In the present disclosure, an LBT procedure that requires a random backoff procedure may be expressed as 'LBT-type-A'. In addition, the present disclosure may express an LBT procedure with a fixed time length of 25 µs as 'LBT-type-B'. In addition, the present disclosure may express an LBT procedure with a fixed time length of 16 µs as 'LBT-type-C'. As described above, the LBT-Type-A may have a CO configuration (in an exemplary embodiment, CO length) varying depending on the LBT type or LBT parameter(s). In addition, the LBT-Type-C may be defined as one of the LBT types, but it may mean that the terminal may not actually perform an LBT procedure and the terminal does not transmit signals/channels for a fixed time of 16 µs.

The communication node (e.g., transmitting node) that performed the LBT operation may transmit information on a CO (e.g., CO configuration information) secured by the LBT operation to another communication node (e.g., receiving node). The CO configuration information may include LBT parameter(s) used for the LBT operation of the terminal. The LBT parameter(s) may include information of the priority class. The CO configuration information may include at least one of information on a start time point of the CO, information on a length of the CO, or information on an end time point of the CO. In the present disclosure, a term 'time point' and a term 'time' may be used as having the same meaning.

The receiving node may receive the CO configuration information from the transmitting node and identify the LBT parameter(s) used for securing the CO based on the CO configuration information. The receiving node may identify the priority class for the CO initiated by the transmitting node based on the LBT parameter(s).

Additionally, a transmitting device may transmit information on a CO secured through an LBT procedure to a receiving device. The information on the CO (e.g., CO configuration information) may include one or more of information on a start time of the CO, information on a time length of the CO, and information on an end time of the CO. The receiving device may transmit a signal/channel at an arbitrary time within the CO using the indicated CO configuration information.

The transmitting device may configure a COT based on the LBT type of 'LBT-Type-A'. The COT may indicate time resources, frequency resources, or time-frequency resources. The COT may be referred to as a CO or channel occupancy resource (COR). Since time-frequency resources in an unlicensed band are shared with other communication nodes, the time-frequency resources may be used discontinuously by a specific communication node. Accordingly, signal/channel transmission in the unlicensed band may occur in form of discontinuous bursts. Here, a burst form may mean a transmission structure configured with one or more slots. In addition, a transmission structure configured with consecutive OFDM symbols, which has a length shorter than a slot length, may be included in the burst form. In sidelink communication, transmission resources may be configured continuously during the COT.

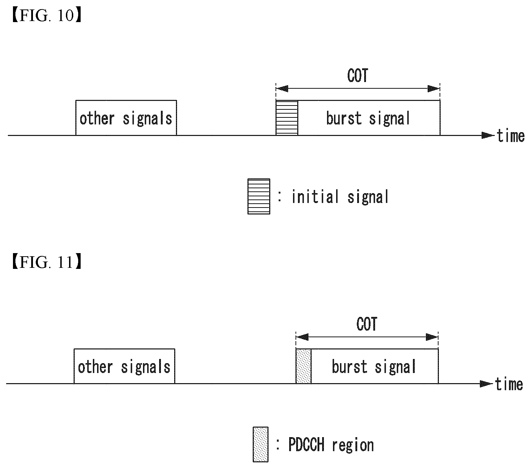

FIG. 10 is a conceptual diagram illustrating a first exemplary embodiment of a channel occupancy time in a communication system.

Referring to FIG. 10, the transmitting device may transmit an initial signal and/or a burst signal (e.g., PSSCH, PSFCH, PSCCH, reference signal) within the COT. Here, the initial signal may be a signal copied from the first symbol of sidelink transmission. Alternatively, the initial signal may be a signal configured as a cyclic prefix.

FIG. 11 is a conceptual diagram illustrating a second exemplary embodiment of a channel occupancy time in a communication system.

Referring to FIG. 11, the transmitting device may transmit a PSCCH and/or burst signal within the COT.

Hereinafter, the present disclosure will describe a method for allocating sidelink transmission resources and control information related to allocation. First, the present disclosure will describe resource allocation (RA), which is a sidelink transmission resource allocation method. Transmission resources for transmitting or receiving a signal/channel may be allocated to a sidelink terminal.

SL resources may be allocated based on a mode 1 or mode 2. The mode 1 may be referred to as a resource allocation (RA)-mode 1, and the mode 2 may be referred to as an RA-mode 2. When the RA-mode 1 is used, a base station may transmit DCI (e.g., SL grant) including SL resource allocation information to a terminal, and the terminal may perform SL communication using SL resource(s) allocated by the base station. When the RA-mode 2 is used, a terminal may perform a resource sensing operation within a resource pool, perform a resource selection operation for resources sensed by the resource sensing operation, and perform SL communication using resources selected by the resource selection operation.

In the RA-mode 1, when transmission data occurs, the terminal may transmit a scheduling request (SR) for the transmission data to the base station, and the base station may use a dynamic grant (DG) based on the SR of the terminal to allocate resources (e.g., SL resources) to the terminal. In the RA-mode 1, the base station may allocate periodic resources to the terminal in a semi-static manner, and the terminal may perform SL communication using the periodic resources allocated by the base station.

The periodic resources allocated in the semi-static manner may be configured grant (CG) resources. The base station may transmit allocation information of the CG resources to the terminal. The allocation information of the CG resources may include at least one of position information of the CG resources, time resource information of the CG resources, frequency resource information of the CG resources, or periodicity information of the CG resources. Depending on a release procedure or deactivation procedure of the CG resources, CG schemes may be classified into CG-Type 1 and CG-Type 2. In the CG-Type 1, the CG resources may be released by RRC signaling. In the CG-Type 2, the CG resources may be deactivated by DCI signaling.

In the RA-mode 2, the terminal may perform a resource sensing operation during a sensing window, select resource(s) that satisfy a predefined condition among resources sensed by the resource sensing operation, and transmit an SL signal/channel using the selected resource(s). The resource sensing/selection methods according to the RA-mode 2 may be classified into a dynamic scheme and a semi-static scheme. According to the semi-static scheme, specific time resource(s) may be occupied. The dynamic scheme and semi-static scheme may be distinguished depending on a time of selecting a new resource. When the dynamic scheme is used, the terminal select a resource for TB transmission every time it wants to transmit a new TB. The TB transmission may include new TB transmission (e.g., initial TB transmission) and/or TB retransmission. One or more resources (e.g., one or more transmission resources) may be used, occupied, and/or reserved for the TB transmission.

When the semi-static scheme is used, a counter value for TB transmission may be 0 during a specific time (e.g., resource reservation interval (RRI)). Alternatively, when the semi-static scheme is used, a new transmission resource may be selected under a specific condition. A counter value for TB transmission may be selected randomly. The selected counter value may be decreased by 1 when one TB transmission (e.g., new TB transmission and/or TB retransmission) is completed. When the semi-static scheme is used, the terminal may continue to occupy the selected resource during a specific time. In other words, the terminal may continue to use the selected resource during the specific time. The specific time may mean a time that the terminal can exclusively occupy. The specific time may be defined as RRI.

The base station may signal an RRI list to the terminal. The RRI list may include up to 16 RRIs (e.g., up to 16 RRI values). The signaling may be at least one of system information (SI) signaling, RRC signaling, MAC CE signaling, or PHY signaling. The terminal may receive the RRI list from the base station, select one RRI among the RRIs belonging to the RRI list, and use the selected resource (e.g., selected transmission resource) during the selected RRI. The terminal may occupy consecutive resources during the RRI. The consecutive resources may be configured in a logical resource region for SL.

A first terminal may transmit SCI including information of a selected RRI to a second terminal. The second terminal may receive the SCI from the first terminal and identify the RRI selected by the first terminal based on an information element included in the SCI. The second terminal may not select a resource (e.g., resource selected by the first terminal) during the RRI indicated by the SCI. Information on the resource selected by the first terminal may be included in the SCI.

When the RA-mode 2 is used, a resource sensing window and/or a resource selection window may be configured. The resource sensing window may be referred to as a sensing window (SSW), and the resource sensing operation may be performed within the SSW. The resource selection window may be referred to as a selection window (SLW), and the resource selection operation may be performed within the SLW. The resource used during the RRI (e.g., RRI value) indicated by the SCI may be identified by the resource sensing operation performed within the SSW.

The SCI may include scheduling information (e.g., scheduling information of the TB) and/or parameter(s) applied to transmission of the TB. The parameter(s) applied to transmission of the TB may be used for demodulation/decoding of the TB in the receiving terminal. The SCI may be classified into first-stage SCI (1st SCI) and second-stage SCI (2nd SCI). The first-stage SCI may be transmitted on a PSCCH, and the second-stage SCI may be transmitted on a PSSCH. The second-stage SCI may be associated with the first-stage SCI. The first-stage may include scheduling information for initial TB transmission and/or scheduling information for TB retransmission. The second-stage SCI may include at least one of information on a transmitting terminal of the PSSCH, information on a receiving terminal of the PSSCH, HARQ feedback information, or retransmission information.

Y transmission resources including a slot where the first-stage SCI is transmitted may be configured. Y may be a natural number. For example, Y may be 2 or 3. The first transmission resource among Y transmission resources may be configured in the slot where the first-stage SCI is transmitted. In other words, the first transmission resource among the Y transmission resources may be the slot where the first-stage SCI is transmitted. Slot(s) in which the remaining (Y-1) transmission resources are configured may be defined by slot offset(s). The slot offset may be a positive integer. The maximum value of the slot offset may be 32.

The scheduled first transmission resource may include N_{subchannel} subchannels in the frequency domain. The first subchannel (e.g., start subchannel) among N_{subchannel} subchannels may be a subchannel where the first-stage SCI is transmitted. N_{subchannel} may be a natural number. N_{subchannel} may be set to be equal to or less than the maximum number of subchannels set by higher layer signaling. The first-stage SCI may include frequency resource information of the second transmission resource (e.g., information of N subchannel(s), information of a start subchannel among the N subchannel(s)) and/or frequency resource information of the third transmission resource (e.g., information on N subchannel(s), information on a start subchannel among the N subchannel(s)). The number N of subchannels of the second transmission resource may be the same as the number N_{subchannel} of subchannels of the first transmission resource. The number N of subchannels of the third transmission resource may be the same as the number N_{subchannel} of subchannels of the first transmission resource. The first transmission resource among the Y transmission resources may be a transmission resource for the first TB transmission (e.g., initial TB transmission). The remaining (Y-1) transmission resource(s) may be transmission resource(s) for TB retransmission.

The first-stage SCI may include one or more information elements defined in Table 1 below.

**[Table 1]**

| **Information elements** |
|---|
| Priority: priority of data or information transmitted on a PSSCH |
| Frequency resource assignment: information on subchannels for two or three transmission resources |
| Time resource assignment: information on slot offset(s) for one or two additional transmission resources in addition to the first-stage SCI |
| Resource reservation period: time period during which the same resource is used |
| PSFCH overhead indication: information indicating whether to transmit a PSFCH. The receiving terminal may perform an operation of determining a TB size (TBS) and/or an operation of identifying resource elements (REs) used for PSSCH transmission based on the PSFCH overhead indication. |
| Second-stage SCI format: SCI format 2-A, SCI format 2-B, SCI format 2-C |
| DMRS pattern |
| Beta offset indicator |
| DMRS port number |
| MCS |
| Additional MCS table indicator |
| Conflict information receiver flag |
| Other information element(s) |

The second-stage 2 SCI may include one or more information elements. The information elements included in the second-stage SCI may vary depending on the format of the second-stage SCI. The second-stage SCI may include one or more information elements defined in Table 2 below.

**[Table 2]**

| **Information elements** |
|---|
| HARQ process number |
| New data indicator (NDI) |
| Redundancy version (RV) |
| Source ID |
| Destination ID |
| HARQ feedback enabled/disabled indicator |
| Cast type indicator |
| Other information element(s) |

Meanwhile, signal/channel configuration in the frequency-time domain or signal/channel configuration in the time domain of the transmission resource(s) allocated to or selected by the terminal may be as follows. As an exemplary embodiment, signal/channel configuration for a PSSCH for TB transmission may be consecutive OFDM symbols within the transmission resource. Hereinafter, 'symbol' may refer to 'OFDM symbol'. The terminal may configure and transmit the PSSCH with consecutive symbols within one slot period or transmission resource. The consecutive symbols may include a demodulation reference signal (DMRS) for signal demodulation. The terminal may not configure the PSSCH or may not transmit the PSSCH in symbol(s) that meet the following conditions. Here, the conditions may include one or more of the following conditions.
- The PSSCH cannot be configured or transmitted in symbol(s) other than symbols configured for sidelink.
   ∘ Here, symbols for sidelink may be defined according to an SL-start symbol (e.g., *sl-StartSymbol*) and an SL-symbol length (e.g., *sl-LengthSymbols*)*.* Here, the SL-start symbol may mean an index of the first symbol among consecutive symbols as long as the SL-symbol length. Here, PSSCH allocation may start at a symbol indicated by an index (SL-start symbol + 1). Here, a symbol for automatic gain control (AGC) may be configured at a position indicated by the SL-start symbol. The symbol may be configured to the same symbol as the symbol indicated by the index (SL-start symbol + 1).
- A PSFCH may be configured in an arbitrary slot. If a PSFCH is configured in an arbitrary slot, the PSSCH cannot be configured or transmitted in symbol(s) configured for the PSFCH. Here, the slot where the PSFCH is configured may be a slot configured periodically according to a PSFCH configuration periodicity (e.g., 1, 2, or 4). Here, the periodicity may be applied within a set of slots configured for sidelink.
- A PSFCH may be configured in an arbitrary slot. If a PSFCH is configured in an arbitrary slot, the PSSCH cannot be configured or transmitted in a symbol immediately preceding the symbol(s) configured for the PSFCH.
- The PSSCH cannot be configured or transmitted in the last symbol among symbols configured for sidelink.

In the above description, a symbol not included in the PSSCH configuration during the transmission resource or one slot period may be expressed as 'gap symbol' or 'gap OFDM symbol'. In addition, the sidelink may be a link between the terminals. Therefore, a received signal strength may vary depending on the positions of the transmitting terminal and the receiving terminal. Accordingly, AGC may be required to ensure that a signal is input to a receiver at an appropriate level depending on the received signal strength. The symbol for AGC may be included in the first symbol of PSCCH/PSSCH transmission. Additionally, a symbol for AGC may be configure at a symbol position before PSFCH transmission. In addition to the AGC symbol, a time required for transmission after signal reception may be configured as the 'gap symbol'. Therefore, the last symbol of the transmission or the last symbol of the slot may be configured as the gap symbol. In addition, even in the slot in which PSCCH/PSSCH symbols and PSFCH symbol are configured, the gap symbol may be configured after the last PSCCH/PSSCH symbol.

When a gap symbol is configured in sidelink transmission of an unlicensed band, a resource may be occupied by another device in the unlicensed band if a time of the gap symbol is longer than a predetermined time length. Therefore, when using physically consecutive resources in an unlicensed band, the gap symbol may not be configured. Further, a certain number of samples of the preceding symbol or the following symbol may be copied and configured as a cyclic prefix or cyclic postfix so that the gap symbol is configured to have a length smaller than one symbol length.

The length of the cyclic prefix may be a predefined value. Alternatively, the length of the cyclic prefix may be a value specified by SCI. When transmitting using temporally consecutive slots, the terminal may transmit a cyclic prefix of the first symbol of the slot following the previously-transmitted slot by advancing it by a defined length without indication from SCI.

Meanwhile, the PSFCH may be configured periodically within the SL resource region. The slot in which the PSFCH is configured may be referred to as a PSFCH slot. The PSFCH slot may be configured according to a periodicity. The periodicity of the PSFCH slot may be referred to as a PSFCH transmission occasion resource (PSFCH TPR). The PSFCH TRP may be configured as 1 slot, 2 slots, or 4 slots. PRB(s) capable of PSFCH transmission in the frequency domain may be indicated by a bitmap. PRBs available for PSFCH transmission may be all PRBs or some PRBs. One PSFCH may be transmitted in one PRB. Alternatively, in an unlicensed band, one PSFCH may be transmitted on one or more PRBs.

The PRB(s) in which the PSFCH is transmitted may be determined based on a position of a slot where a PSSCH associated with the PSFCH is received. A difference (e.g., slot offset, interval) between the slot where the PSSCH is received and the slot where the PSFCH is to be transmitted may be considered. For example, the PSFCH may be transmitted in the first PSFCH slot after K slot(s) from a slot n where the PSSCH is received. A PRB index (e.g., index of the PRB where the PSFCH is transmitted) may be defined based on a function f(P_{PSFCH}, n, K, k_{subch}). P_{PSFCH} may be the periodicity of PSFCH. n may be the index of the slot where the PSSCH is received. K may be a slot offset used to determine the PSFCH slot where the PSFCH is transmitted. k_{subch} may be an index of the subchannel where the PSCCH is configured. In an unlicensed band, a set of interlace PRBs may enable X PRBs. In this case, the number of sets of interlace PRBs may be 10 or less.

In the function f(.) for determining the PRB index, at least one of a different code q, identifier (ID) of the transmitting terminal, or ID of the receiving terminal transmitting the PSFCH may be considered. The code q may be defined by a cyclic shift or a cyclic shift pair. The cyclic shifts may be related to different Zadoff-Chu sequences. The cyclic shift pair may refer to a pair of different sequences according to acknowledgment (ACK) or negative ACK (NACK).

A PRB set for PSFCH transmission may be determined based on the slot n where the PSSCH is transmitted and/or the index of the subchannel where the PSSCH is transmitted. A PRB in the PRB set and a code carried by the PSFCH may be determined based on the function that considers at least one of the ID of the transmitting terminal or the ID of the receiving terminal transmitting the PSFCH.

Meanwhile, a resource block set (RB set) may be as follows. The LBT operation for use of an unlicensed band may be performed in an arbitrary bandwidth unit. The present disclosure may define an arbitrary bandwidth for performing the LBT operation as an LBT bandwidth (LBT BW). In an exemplary embodiment, the LBT bandwidth may be 20MHz. The frequency-domain size of the sidelink resource pool may be larger than the LBT bandwidth. In this case, multiple LBT bandwidths may be configured in the resource pool. Alternatively, multiple RB sets may be configured in the resource pool.

In this case, a bandwidth or PRB(s) of an arbitrary size may be considered as a guard band (GB) for filtering between RB sets or between LBT bandwidths. The guard band may be configured between two adjacent RB sets.

The subchannel of the sidelink may be configured with one or more PRBs as described above. Depending on how the RB sets and guard bands are configured, arbitrary PRBs in an arbitrary subframe may not be included in an RB set and may be included in a guard band. In this case, different subchannels in one RB set may be configured with different numbers of PRBs. As an exemplary embodiment, a subchannel with fewer PRBs than other subchannels may be used for other purposes. As an exemplary embodiment, a subchannel with fewer PRBs than other subchannels may be a common subchannel. Here, the common subchannel may be used for the terminal to transmit an arbitrary signal or sequence. This may be considered to satisfy a technical condition of occupying more than a certain bandwidth within the LBT bandwidth.

Meanwhile, a resource used for PSCCH/PSSCH transmission by the terminal may be configured on a subchannel basis. A subchannel may be configured with a certain number of physically contiguous PRBs. Alternatively, the subchannel may be configured with a certain number of PRBs physically spaced at regular intervals in the frequency domain. A subchannel configured with contiguous PRBs may be defined as 'C-subchannel'. A subchannel configured with PRBs spaced apart at regular intervals may be defined as 'I-subchannel'.

Summarizing what has been described above, resources that configure a sidelink in an unlicensed band may configure RB sets each of which is an unit of summing an LBT bandwidth and a guard band in the resource pool. An RB set may include a plurality of subchannels. Depending on configuration of a guard band, an arbitrary subchannel among subchannels of the same RB set may have a smaller number of PRBs than other subchannels.

In case of I-subchannels, an arbitrary subchannel of the subchannels may have a smaller number of PRBs than other subchannels depending on a subcarrier spacing (SCS). Here, the subchannel with a smaller number of PRBs compared to other subchannels may be defined as 'r-subchannel'.

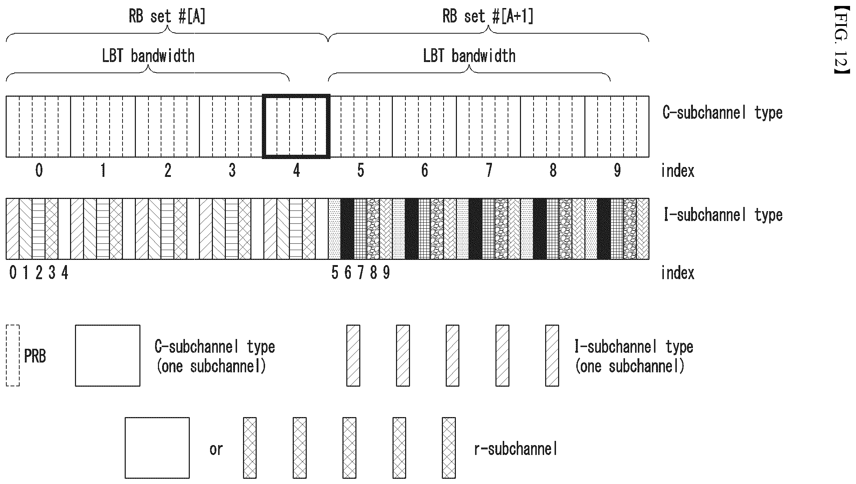

FIG. 12 is a conceptual diagram illustrating a first exemplary embodiment of RB sets and subchannels.

Referring to FIG. 12, a bandwidth obtained by adding a guard band to an LBT bandwidth may be the same as a bandwidth of an RB set. Accordingly, a bandwidth obtained by adding a first guard band to a first LBT bandwidth may be the same as a bandwidth of an RB set #A. In addition, a bandwidth obtained by adding a second guard band to a second LBT bandwidth may be the same as a bandwidth of an RB set #A+1. Contiguous PRBs may configure a C-subchannel. PRBs spaced at regular intervals may configure an I-subchannel. In FIG. 12, a subchannel distinguished by a thick line (i.e., C-subchannel with an index 4) among C-subchannels may be an r-subchannel. Additionally, an I-subchannel with an index 3 among I-subchannels may be an r-subchannel.

A PSCCH may be configured with PRB(s) having low index(es) in each subchannel. In this case, a start of each RB set may coincide with a start of the first subchannel. As a result, the terminal may minimize the complexity of performing PSCCH blind detection.

Referring to FIG. 12, the RB set #A may start based on the first PRB of the subchannel with the index 0. Additionally, the RB set #A+1 may start based on the first PRB of the subchannel with the index 5. As an exemplary embodiment, subchannel indexes of the I-subchannels may be configured independently from the start PRB of the RB set. In this example, indexes 5, 6, 7, 8, and 9 may be defined as indexes 0, 1, 2, 3, and 4. The terminal may identify the positions of RB sets in the resource pool.

In an exemplary embodiment, the terminal may identify a frequency-domain start position of each RB set by considering LBT bandwidths from the start PRB of the resource pool. The base station may configure the resource pool by considering multiples of the LBT bandwidth for efficient resource use. Alternatively, the base station may provide the terminal with information on an index of a start PRB of the first RB set, information on a PRB periodicity of the RB sets, and/or information on the number of PRBs of the RB set.

In addition, the base station may provide information on PRB(s) included in the guard band to the terminal. Here, information on PRB(s) included in the guard band may include information on the number of PRBs included in the guard band, information on indexes of PRBs included in the guard band, and/or information on index(es) of subchannel(s) included in the guard band and the number of PRBs of the corresponding subchannel(s). As an exemplary embodiment, the terminal may calculate a position of each RB set from the PRB periodicity of the RB sets and the start position of the first PRB. The terminal may identify subchannel(s) including the guard band by using information such as the number of PRBs in the guard band or the indexes of the PRBs in the guard band.

The terminal may calculate a transport block size (TBS) by considering PRBs not used for PSSCH transmission in the subchannel(s) included in the guard band. As an exemplary embodiment, the base station may provide the terminal with information on the number of PRBs included in the guard band. In this case, the number of PRBs included in the guard band may be N_{GB}. Here, N_{GB} may be 0 or a positive integer.

The RB set may include N_{subch} subchannels. Here, N_{subch} may be a positive integer. In each RB set, subchannel indexes may start from 0. Then, the terminal may use all PRBs of subchannels indexed from 0 to (N_{subch} - 2) for PSSCH/PSCCH transmission in the C-subchannel structure. In contrast, the terminal may not use N_{GB} PRBs of a subchannel with an index [N_{subch} - 1] for PSSCH/PSCCH transmission in the C-subchannel structure.

In the I-subchannel structure, the terminal may use all PRBs of subchannels indexed from 0 to (N_{subch} - N_{GB} - 1) for PSSCH/PSCCH transmission. In contrast, one PRB of each of subchannels indexed from (N_{subch} - N_{GB}) to (N_{subch} - 1) may be used as the guard band. Accordingly, the terminal may not be able to use all PRBs of the subchannels indexed from (N_{subch} - N_{GB}) to (N_{subch} - 1) for PSSCH transmission. The terminal may identify the number of PRBs that need to be considered for TBS determination according to the calculation method of the exemplary embodiment described above.

Meanwhile, the terminal may receive scheduling information for subchannels belonging to two consecutive RB sets from the base station. In this case, the terminal may determine that a guard band has not been allocated. For example, referring to FIG. 12, the terminal may receive information scheduling subchannels with indexes from 0 to at least 5 from the base station. In this case, the terminal may determine that there is no PRB used as the guard band.

Meanwhile, a scheduling method may be defined according to a method of defining indexes of the respective subchannels. The method of defining the index of each subchannel according to the first exemplary embodiment may be a method of sequentially increasing indexes of subchannels from a subchannel included in an RB set with the lowest PRB index.

A method of defining the index of each subchannel according to the second exemplary embodiment may be a method of starting the indexes of subchannels in each RB set from 0. In this case, the subchannel indexes of each RB set may be distinguished by considering an RB set index of each RB set together. Here, the index of each subchannel may be defined starting from 0 across different RB sets. In this case, scheduling information may be defined with a scheduled RB set and a subchannel index scheduled in the RB set. If adjacent RB sets are scheduled, PRBs between the RB sets may also be used for PSSCH transmission. Therefore, all PRBs located in a guard band between the adjacent RB sets may be used for PSSCH transmission.

An intra-cell guard band may not be used for subchannel configuration. An operation of the terminal for PRBs in the intra-cell guard band or r-subchannel may be defined as follows. In configuration of I-subchannel and/or C-subchannel, PRB(s) of a guard band between inter-cell RB sets may include some PRBs of subchannel(s) of some I-subchannel indexes. In configuration of I-subchannel and/or C-subchannel, PRB(s) of a guard band between inter-cell RB sets may include some PRBs of subchannel(s) of some C-subchannel indexes. Additionally, PRBs in which a PSCCH is expected to be configured may be included in the PRB(s) of the guard band.

In case of I-subchannel, a PRB with a high (high value) PRB index may be included in the guard band. In this case, some PRBs of the I-subchannel with a high index may be included in the guard band. When the subchannel is scheduled, the terminal may assume a combination of one or more of the following definitions in PSSCH/PSCCH transmission, TBS determination, and/or the like.
- When transmitting a PSSCH, the terminal may assume a TB or data for the corresponding PRBs is transmitted as being processed by puncturing.
- Downlink or sidelink control information may include information on whether PRBs included in the guard band of the subchannel are included in or excluded from TB or data transmission. Additionally, where the TB or data transmission includes PRBs included in the guard band of the subchannel, the terminal may assume puncturing.
- Information on whether PRB(s) included in the guard band of the subchannel are included in or excluded from the TB or data transmission may be defined or configured by an RRC message.
- Information on the subchannels included in the guard band may be defined or configured in the terminal(s) by an RRC message, as described above.
- PRBs excluded from PSSCH transmission may not be included in the number of PRBs considered in TBS determination. Alternatively, if a ratio or the number of excluded PRBs is equal to or higher than a certain ratio or equal to or greater than a certain number, the terminal may not include the excluded PRBs in the number of PRBs considered in TBS determination.

In case of I-subchannel, a PRB with a small (small value) PRB index may be included in the guard band. In this case, some PRBs of the I-subchannel with a small index may be included in the guard band. When the subchannel is scheduled, the terminal may assume a combination one or more of the following definitions in PSSCH/PSCCH transmission, TBS determination, and/or the like.
- When transmitting a PSSCH, the terminal may assume a TB or data for the corresponding PRBs is transmitted as being processed by puncturing.
- Information on whether PRBs included in the guard band of the subchannel are included in or excluded from TB or data transmission may be included in downlink or sidelink control information. The PRB(s) included in the guard band of the subchannel may be included in TB or data transmission. In this case, puncturing may be assumed.
- Information on whether PRB(s) included in the guard band of the subchannel are included in or excluded from TB or data transmission may be defined or configured by an RRC message.
- Information on the subchannels included in the guard band may be defined or configured in the terminal(s) by an RRC message, as described above.
- PRBs excluded from PSSCH transmission may not be included in the number of PRBs considered in TBS determination. Alternatively, if a ratio or the number of PRBs exclude from PSSCH transmission is equal to or higher than a certain ratio or equal to or greater than a certain number, the terminal may not include the excluded PRBs in the number of PRBs considered in TBS determination.
- PSCCH transmission may be performed in reverse order starting from the PRBs with high indexes in the subchannel.

Meanwhile, in case of C-subchannel, a subchannel with a high (high value) index may be included in the guard band. When the subchannel is scheduled, the terminal may assume a combination of one or more of the following definitions in PSSCH/PSCCH transmission, TBS determination, and/or the like.
- When transmitting a PSSCH, the terminal may assume that a TB or data for the corresponding PRB is transmitted as being processed by puncturing.
- Downlink or sidelink control information may include information on whether PRB(s) included in the guard band of the subchannel are included in or excluded from TB or data transmission. When TB or data transmission includes PRB(s) included in the guard band of the subchannel, the terminal may assume puncturing.
- Information on whether PRB(s) included in the guard band of the subchannel are included in or excluded from TB or data transmission may be defined or configured by an RRC message.
- Information on the subchannels included in the guard band may be defined or configured in the terminal(s) by an RRC message, as described above.
- PRBs excluded from PSSCH transmission may not be included in the number of PRBs considered in TBS determination. Alternatively, if a ratio or the number of excluded PRBs is equal to or higher than a certain ratio or equal to or greater than a certain number, the terminal may not include the excluded PRBs in the number of PRBs considered in TBS determination.

Meanwhile, in case of C-subchannel, a subchannel with a low (low value) index may be included in the guard band. When the subchannel is scheduled, the terminal may assume a combination of one or more of the following definitions in PSSCH/PSCCH transmission, TBS determination, and/or the like.
- When transmitting a PSSCH, the terminal may assume that a TB or data for the corresponding PRB is transmitted as being processed by puncturing.
- Downlink or sidelink control information may include information on whether PRB(s) included in the guard band of the subchannel are included in or excluded from TB or data transmission. When TB or data transmission includes PRB(s) included in the guard band of the subchannel, the terminal may assume puncturing.
- Information on whether PRB(s) included in the guard band of the subchannel are included in or excluded from TB or data transmission may be defined or configured by an RRC message.
- Information on the subchannels included in the guard band may be defined or configured in the terminal(s) by an RRC message, as described above.
- PRB(s) excluded from PSSCH transmission may not be included in the number of PRBs considered for TBS calculation. Alternatively, if a ratio or the number of PRB(s) excluded is equal to or higher than a certain ratio or equal to or greater than a certain number, the terminal may not include the PRBs excluded from PSSCH transmission in the number of PRBs considered for TBS calculation.
- PSCCH transmission may be performed in reverse order starting from the PRBs with high indexes in the subchannel.

Hereinafter, transmission or reception of a PSSCH or PSCCH in a C-subchannel or I-subchannel including PBR(s) designated or configured as an intra-cell guard band will be described in more detail with reference to an exemplary embodiment. PRB(s) in the guard band may be used for PSSCH configuration. However, the PRB(s) in the guard band may not be used for a PSCCH.

An exemplary embodiment of PSCCH configuration may be as follows. The terminal may identify a time-domain symbol position and the number of PRBs from higher layer messages *sl-TimeResourcePSCCH* and *sl-FreqResourcePSCCH* that determine PSCCH resources. Here, the number of PRBs may mean the number of PRBs starting from the next PRB excluding PRB(s) used as the guard band. Here, a PSSCH may be configured to include the PRB(s) used as the guard band. Therefore, in the subchannel in which the PRBs of the guard band are configured, the PSCCH may be configured starting from the next lower PRB excluding the PRBs for the guard band of the subchannel, including PRBs of the associated PSSCH.

Another exemplary embodiment of PSCCH configuration may be as follows. This may be a case when the SCI format 1-A includes information on a start potion of a subchannel of PSCCH/PSSCH. Here, the exemplary embodiment may assume a case where a subchannel including guard band PRB(s) is used for a PSSCH, and a PSCCH is configured in a subchannel with an index next to the subchannel.

From the above information, the terminals may determine that the PSSCH is configured starting from a subchannel with a lower index than a subchannel where the PSCCH is detected. Here, bit(s) indicating the above information may be configured and indicated in the SCI format 1-A. The indication bit(s) may be expected to be configured in the SCI format 1-A only when an intra-cell consisting of two or more RB sets is involved. Other bit(s) indicating the above information may be defined as a joint code in a frequency resource indication value (FRIV) for scheduling a PSSCH subchannel resource or may be defined according to an arbitrary rule. Alternatively, it may be defined as a joint code in an FRIV for scheduling an RB set resource or may be defined according to an arbitrary rule.

Another exemplary embodiment for PSCCH configuration may be as follows. If a PSCCH is configured in a subchannel immediately after a subchannel including guard band PRBs according to configuration by a higher layer message, it may be determined that the subchannel including the guard band PRBs is included in PSSCH transmission. Alternatively, it may be indicated in the SCI format 1-A as 'lowest index of the subchannel allocation to the initial transmission'. Alternatively, a new field may be defined in the SCI format 1-A to indicate that a start subchannel of a PSSCH resource starts from the previous subchannel.

Another exemplary embodiment of PSCCH configuration may be as follows. This may correspond to an example of configuring a PSCCH at a center of subchannels constituting a PSSCH. As an exemplary embodiment, when X subchannels are configured, a PSCCH may be configured in a (Floor(X/2))-th or (Floor(X/2)-1)-th subchannel among the X subchannels. Alternatively, when considering a start of the X subchannels as 0, a PSCCH may be configured in a (Floor(X/2))-th or (Floor(X/2)-1)-th subchannel.

The second or third resource may be indicated through resource reservation, and in the case where a start subchannel includes the guard band, the terminal may expect a PSCCH to be configured from a start PRB of a subchannel next to the subchannel including the guard band. Alternatively, the second or third resource may be indicated through resource reservation, and in the case where the start subchannel includes the guard band, the terminal may expect a PSCCH to be configured from a PRB next to the guard band PRB(s).

Meanwhile, scheduling may include reservation of two or three resources. The terminal may identify a subchannel start index of the first resource by detecting a PSCCH. The terminal may identify the second index or the second and third indexes along with the number of subchannels from frequency resource assignment information (FRIV) provided by SCI. When following the definition of 'subchannel index' of the first exemplary embodiment, the terminal may identify a start position of the allocated subchannel according to the sequential index. The number of subchannels may be the same for all of the first, second, and third subchannels. When following the definition of 'subchannel index' of the second exemplary embodiment, the terminal may identify an RB set index and a subchannel index of each transmission resource. As an exemplary embodiment, the number L_{subch} of subchannels in the FRIV may include information on the number of subchannels used in one RB set and the number of RB sets. That is, the number of the RB sets and subchannels used may be jointly defined in L_{subch}. Here, a resource may be determined by an index that increases starting from an RB set index of the RB set where the PSCCH is detected and a subchannel index of the subchannel where the PSCCH is detected. When the RB set reaches the last index, an RB set of an RB set index calculated by a modulo operation may be determined. Also, for the second index or the second and third indexes, a start RB set index and a subchannel index are jointly defined in one variable.

Meanwhile, a transmission time of a PSCCH/PSSCH and a resource structure thereof may be defined according to an SL-start symbol (e.g., *sl-StartSymbol*) and an SL-symbol length (e.g., *sl-LengthSymbols*) as described above. Additionally, a PSFCH may be included in arbitrary slots depending on a PSFCH transmission periodicity. If a sidelink is configured in an unlicensed band, an LBT operation may need to be performed prior to transmission as described above. PSCCH/PSSCH transmission may not be performed depending on a result of the LBT operation. Additional transmission time(s) (or time point(s) or timing(s)) may be defined to ensure transmission occasion(s). The present disclosure will describe two transmission times, 'transmission time-A' and 'transmission time -B', as an example.

A first terminal may transmit a signal/channel to a second terminal using an SL transmission method. The second terminal may receive the signal/channel from the first terminal using an SL reception method. The first terminal may transmit a TB on a PSSCH. The first terminal may transmit control information on the PSSCH. The control information may include information element(s) required for demodulation and/or decoding of the TB transmitted on the PSSCH. The first terminal may transmit control information on a PSCCH. The second terminal may receive the control information from the first terminal, and identify resource usage information based on the control information. The second terminal may receive the PSSCH (e.g., TB) and transmit an HARQ-ACK feedback (e.g., HARQ feedback, HARQ response) for the PSSCH to the first terminal. The HARQ-ACK feedback for the PSSCH may be transmitted on a PSFCH.

In the present disclosure, a terminal performing PSCCH transmission, PSSCH transmission, and/or PSFCH reception may be referred to as a transmitting terminal or a first terminal, and a terminal performing PSCCH reception, PSSCH reception, and/or PSFCH transmission may be referred to as a receiving terminal or a second terminal.

In SL-U communication, the terminal may perform an LBT operation before transmitting a signal/channel. If a result of the LBT operation indicates an idle state, the terminal may transmit the signal/channel. If the result of the LBT operation indicates a busy state, the terminal may not transmit the signal/channel. 'The result of the LBT operation indicates the idle state' may mean that the LBT operation is successful. 'The result of the LBT operation indicates the busy state' may mean that the LBT operation fails. Based on a result of comparison between a detected energy level and a predefined threshold, the result of the LBT operation may be judged as idle or busy.

As described above, the terminal may perform the LBT operation immediately before transmitting a PSCCH/PSSCH in an arbitrary slot. When the LBT operation is successful (i.e., when a channel is not occupied by another signal or channel, etc.), the terminal may transmit the PSCCH/PSSCH based on a transmission time-A of the slot. When the LBT operation fails (i.e., when a channel is occupied by another signal or channel, etc.), the terminal may transmit the PSCCH/PSSCH based on a transmission time-B of the slot.

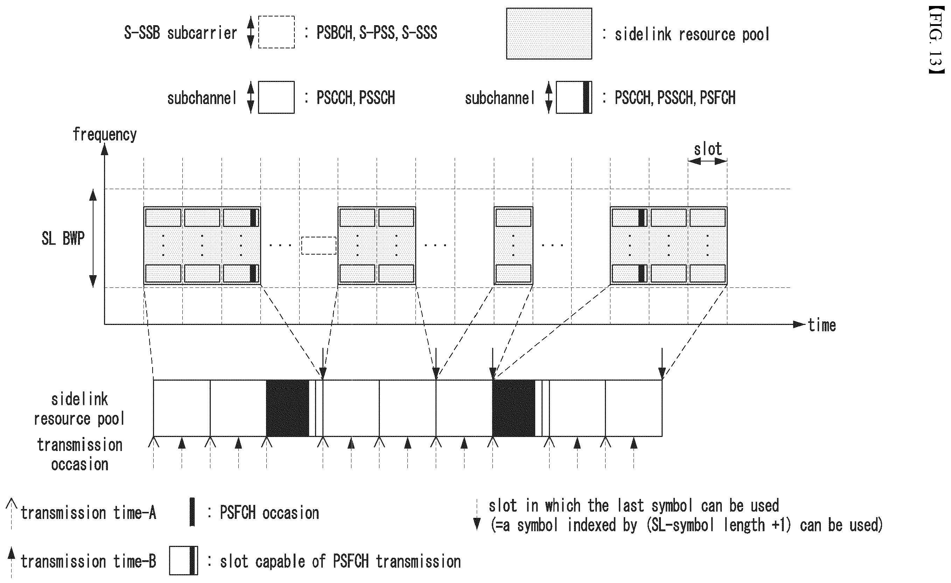

FIG. 13 is a conceptual diagram illustrating a first exemplary embodiment of transmission times.

Referring to FIG. 13, the transmission time-A may correspond to a symbol index of a slot indicated by the SL-start symbol. In this case, a PSCCH/PSSCH symbol may be transmitted in a slot corresponding to a symbol index of (SL-start symbol + 1). Regarding the transmission time-A, the terminal may determine or be configured with the transmission time using one or more of the following exemplary embodiments.

Exemplary embodiment 1) Information on a transmission time-A may be configured by the base station or a higher layer message (e.g., RRC message, etc.). The information may be set to a single value of 0, 1, 2, 3, 4, 5, or 6.

Exemplary embodiment 2) Information on a plurality of transmission time-A's may be configured by the base station or a higher layer message (e.g., RRC message, etc.). The plurality of values may be configured as a list. Among the plurality of candidate values, a value to be applied as a transmission time may be dynamically indicated by DCI of the base station. Alternatively, a transmission time among the plurality of candidate values may be indicated by SCI of the terminal.

The transmission time-A defined by one or more of the above methods may be set differently for each BWP. The transmission time-A defined by one or more of the above methods may be set differently for each terminal. In an unlicensed band, transmission may be determined depending on a channel occupancy status according to an LBT operation of each terminal. Therefore, the same transmission time-A may be configured to all terminals within the same BWP.

Here, a transmission time according to the transmission time-A may mean a start time of transmission including the AGC symbol.

Regarding the transmission time-B, the terminal may determine or be configured with the transmission time in one or more of the following exemplary embodiments.

Exemplary embodiment 1) It may be a time of (transmission time-A + N_{offset}).

Here, N_{offset} may be a fixed value or a natural number. One example of the fixed value of N_{offset} may be 7. Alternatively, N_{offset} may be one of values 1, 2, 3, 4, 5, 6, or 7.

Alternatively, a value of N_{offset} may be set by the base station or a higher layer message (e.g., RRC message). The value may be set to a single value.

Alternatively, a plurality of values of N_{offset} may be configured by the base station or a higher layer message (e.g., RRC message). A value to be applied among these values may be dynamically determined by DCI or SCI.

Alternatively, a value of N_{offset} may be dynamically set to the terminal as being included in DCI or SCI.

Exemplary embodiment 2) The transmission time-B may be dynamically set to the terminal as being included in DCI or SCI.

Exemplary embodiment 3) Information on the transmission time-B may be configured by the base station or a higher layer message (e.g., RRC message, etc.). The information may be set to a single value of 3, 4, 5, 6, or 7.

Exemplary embodiment 4) Information on a plurality of transmission time-B's may be configured by the base station or a higher layer message (e.g., RRC message, etc.). The plurality of values may be configured as a list. A value to be applied as a transmission time among the plurality of candidate values may be dynamically indicated by DCI of the base station. Alternatively, a transmission time among the plurality of candidate values may be indicated by SCI of the terminal.

The transmission time-B defined by one or more of the above methods may be set differently for each BWP. The transmission time-B defined by one or more of the above methods may be set differently for each terminal. In an unlicensed band, transmission may be determined depending on a channel occupancy status according to an LBT operation of each terminal. Therefore, the same transmission time-B may be configured to all terminals within the same BWP.

Here, a transmission time according to the transmission time-B may mean a start time of transmission including the AGC symbol. Alternatively, the transmission time according to the transmission time-B may mean a start time of a valid PSCCH/PSSCH. Alternatively, the transmission time may mean a time of transmission of a symbol for AGC. Here, the symbol for AGC may be a copied symbol of the first valid PSCCH/PSSCH symbol. As an exemplary embodiment, when a symbol index corresponding to the transmission time-B is defined as S_{Idx}, an index of the first valid PSCCH/PSSCH symbol may be S_{Idx}. Alternatively, when a symbol for AGC is configured, the index of the first valid PSCCH/PSSCH symbol may be (S_{Idx} + 1). The valid PSCCH/PSSCH above may mean a signal/channel configured from a symbol that the receiving terminal uses for demodulation and/or decoding.

As an exemplary embodiment, the terminal may occupy an operating channel, and start transmission at a time corresponding to (S_{Idx} - N (i.e., (S_{Idx} - N) > 0)) which is a time N symbols before the transmission time-B to ensure a transmission occasion. This allows the terminal to perform transmission if the channel is not occupied before the transmission time-B after a failure of an LBT operation for starting transmission at the transmission time-A. Here, the terminal may transmit a symbol copied for AGC from a PSCCH/PSSCH to be transmitted. Alternatively, the terminal may configure and transmit a synchronization signal. In this case, a start time of a COT may be defined as the transmission time of (S_{Idx} - N). However, since the above operation may affect LBT results of other terminals, it may be limited to a case indicated by the base station. As an exemplary embodiment, DCI of the base station may include whether transmission before the transmission time-B is possible. A terminal operating in the RA-mode 1 by receiving DCI of the base station may be able to perform transmission before the transmission time-B depending on an LBT result if the DCI indicates that transmission before the transmission time-B is possible. Alternatively, a terminal perform an LBT operation of LBT-type A in a period not a COT may perform transmission at a symbol preceding the transmission time-B without any other configured information.

The transmission time-B may be limited to be valid only under specific condition(s). That is, the terminal may transmit a PSCCH/PSSCH at the transmission time-B if one or more of the following conditions are satisfied.

### Condition 1) A case of a slot that is not a PSFCH occasion

Here, the PSFCH occasion may mean a symbol or slot where a PSFCH can be configured according to a PSFCH transmission periodicity.

Condition 2) A case of wishing to transmit at a next slot. Here, the next slot may mean a next physically consecutive slot. In addition, the case of wishing to transmit may mean that a resource therefor is reserved.

In addition, the terminal may define a PSCCH/PSSCH transmission resource configuration for transmission at the transmission time-B as follows. As an exemplary embodiment, the length of symbols for the transmission at the transmission time-B may be calculated based on symbols defined by the SL-start symbol and the SL-symbol length within the slot.

If transmission is configured continuously in the next slot, transmission at the transmission time-A and/or the transmission time-B may be configured with a transmission resource up to [' SL-symbol length' + 1]. Alternatively, it may be applied when consecutive slots in the resource pool are not physically consecutive slots. This may mean that the last symbol of the slot is also used for PSSCH transmission. In other words, it may mean that the last guard symbol is used for PSSCH transmission. Here, in one slot of the same BWP, the positions of the last symbols, end times, or positions of the end symbols of the transmissions at the transmission time-A and the transmission time B may need to maintain to be the same. In addition, if consecutive slots are configured, the transmission at the transmission time-A may correspond to a time period of the entire transmission resource (i.e., a time period of symbols indexed from 0 to 14 (in case of normal CP) and a time period of symbols indexed from 0 to 12 (in case of extended CP)).

Information on whether or not to use the last symbol may be provided to the terminal(s) as being included in an information field such as 'additional symbol' or 'no last guard symbol' of SCI. Whether to use the last symbol or symbol indexed by [SL-symbol length'+ 1] for PSSCH transmission may be applicable when using the transmission time-A and/or transmission time-B. The information on whether or not to use the last symbol may be indicated by the base station to the terminal through DCI. The terminal receiving the indication may transmit a PSCCH by setting an SCI field indicating whether to use the last symbol to 'enabled'. The SCI field may be transmitted as being included in first-stage SCI. In case of the RA-mode 2, the transmitting terminal may transmit SCI by enabling the field of the SCI. Here, in case of the RA-mode 2, it may be applied to only a case when the next slot following the slot in the sidelink resource pool is not configured physically consecutively. Here, the case of being configured not physically consecutively may mean that a slot that do not belong to the resource pool follows. Alternatively, it may be applied to only a case when a resource pool for the RA-mode 1 and a resource pool for the RA-mode-2 are configured separately.

Hereinafter, the present disclosure will describe a method of determining a TBS in a resource pool in which both the transmission time-A and the transmission time-B are configurable. Since the number of symbols configurable as a transmission resource varies depending on a transmission time, a TBS determination method may be defined according to symbols configurable by the terminal. The TBS may be defined using the number N'_{RE} of resource elements (REs) allocated to a PSSCH of one PRB or one subchannel. In determining N'_{RE}, one or more of the SL-symbol length, number of PSFCH symbols, number of DMRS REs, and number of overhead REs may be considered. When transmission times are different, the SL-symbol length for the transmission time-A and the SL-symbol length for the transmission time-B may be different. When the SL-symbol length is defined based on the transmission time-A and configured in the terminal, the terminal may assume that the positions of the symbols at which transmissions according to the transmission time-A and transmission time-B end within one slot are the same. In this case, the position of the symbol at which the transmission ends may be determined by the SL-symbol length and SL-start symbol for the transmission time-A. In this case, the terminal may determine the number of symbols used for transmission according to the configured transmission time-B. For convenience of description, the present disclosure will describe the number of symbols for the transmission time-A as 'transmission time-A-symbol length', and the number of symbols for the transmission time-B as 'transmission time-B-symbol length'. In addition to what has been described above, the terminal may also receive the symbol length for the transmission time-B through an RRC message. In determining a TBS, the SL-symbol length for the transmission time-A may be used. More specifically, a value obtained by subtracting 2 from the SL-symbol length may be considered. In case of the transmission time-B or in case of the transmission time-A and the transmission time-B, the number of symbols considered for TBS determination may be determined by one or more method(s) according to conditions defined in the following exemplary embodiment.

Condition 1) If a symbol index difference between the transmission time-A and the transmission time-B is equal to or less than X symbols, the SL-symbol length for the transmission time-A may be equally considered or applied in TBS determination for transmission according to the transmission time-B. In this case, as in the case of the transmission time-A, a value obtained by subtracting 2 from the SL-symbol length may be considered. Here, as an exemplary embodiment, X may be a single predefined value. As an exemplary embodiment, X may be 5 and/or 6. Alternatively, a value of X may be a value set in the terminal through an RRC message.

Condition 2) If a symbol index difference between the transmission time-A and the transmission time-B is equal to or greater than 5, 6, or 7 symbols, the SL-symbol length for the transmission time-B may be considered in TBS determination for transmission according to the transmission time-B.

Condition 3) For a resource pool capable of both transmission according to the transmission time-A and transmission according to the transmission time-B, the same SL-symbol length may be considered for the transmission time-A and transmission time-B. Here, as an exemplary embodiment, an average value of the transmission time-A-symbol length and the transmission time-B-symbol length may be considered. As an exemplary embodiment, a maximum integer value that does not exceed the average value may be considered. As another exemplary, a minimum integer value greater than the average value may be considered. Alternatively, a value of the SL-symbol length to be considered for TBS determination may be set by an RRC message.

Condition 4) For a resource pool capable of both transmission according to the transmission time-A and transmission according to the transmission time-B, if a symbol index difference between the transmission time-A and the transmission time-B is equal to or less than X symbols, the same SL-symbol length may be considered. If the symbol index difference is greater than X symbols, the transmission time-A-symbol length and the transmission time-B-symbol length may be respectively considered for transmissions according to the transmission time-A and the transmission time-B. In the case where the same SL-symbol length is considered due to the symbol index difference less than or equal to X symbols, an average value between the transmission time-A-symbol length and the transmission time-B-symbol length may be considered. As an exemplary embodiment, a maximum integer value that does not exceed the average value may be considered. As another exemplary, a minimum integer value greater than the average value may be considered. Alternatively, a value of the SL-symbol length to be considered for TBS determination may be set by an RRC message.

Condition 5) For the transmission according to the transmission time-A, the transmission time-A-symbol length may be considered, and for the transmission according to the transmission time-B, an SL-symbol length may be set by an RRC message according to the transmission time-B. As an exemplary embodiment, a different symbol length may be defined for each symbol index of the transmission time-B, or the same SL-symbol length may be configured for some symbol indexes. Here, when the transmission time-B corresponds to a symbol with an index below a certain symbol index, the SL-symbol length for the transmission time-B may be set to be the same as that for the transmission time-A.

Condition 6) TBS may be determined by considering the same reference symbol length for the transmission time-A and the transmission time-B. Here, as an exemplary, the reference symbol length may be defined as a symbol length defined by an RRC message, and its value may be defined as one of values from 7 to 14. Here, when the two transmission times are configurable, the reference symbol length defined by the RRC message may be used as the SL-symbol length for TBS calculation. Here, the number of AGC symbols and the number of guard symbols may be subtracted from the SL-symbol length. If the AGC symbol(s) are configured in both the transmission time-A and transmission time-B, the number 2 of two AGC symbols may be subtracted from the SL-symbol length. In another exemplary embodiment, regardless of AGC symbol configuration, only one AGC symbol may be subtracted for both the transmission time-A and transmission time-B. This may be to avoid further reduction of the symbol length by AGC when the reference symbol length is defined as smaller than the actual length of the transmission time-A.

If a guard band is included here, the reference symbol length may be used as the SL-symbol length, and a TBS may be calculated by subtracting 2 from the SL-symbol length. In addition, a value to be subtracted according to a DMRS pattern may be defined as the same value as when there is one transmission time. If it needs to be defined as a different value than when there is only one transmission time, an arbitrary offset calculated or defined considering the transmission time-A and the transmission time-B may applied to the value according to the DMRS pattern in calculating the TBS.

When considering COT sharing and the transmission time-B, it may be expected that there is no PSSCH/PSCCH transmission at the transmission time-B during a COT sharing period. Therefore, it may be expected that there is no transmission time-B in a period during which a COT is shared other than a UE that initiates the COT. Here, it may be expected that only one AGC symbol can be configured during the COT sharing period. Accordingly, in TBS determination, a TBS may be calculated considering that only one AGC symbol is configured. In addition, a TBS may be calculated by considering the number of resources based on the SL-symbol length under a condition that only the transmission time-A is configured without considering the reference symbol length for the SL-symbol length. Here, when a first PSSCH/PSCCH is transmitted during the COT sharing period and the second or third transmission is made through resource reservation, the terminal may expect that the same TBS as the TBS during the COT sharing period is configured for the second or third transmission.

For DMRS configuration in a transmission period, a symbol configuration index at the transmission time-A may be configured to increase to an index at the transmission time-B. The index may be increased by a symbol offset (hereinafter, Noffset) between the transmission time-A and the transmission time-B. As an exemplary, a symbol position index of a PSSCH DMRS may be set to an index obtained by adding Noffset. In this case, a value in a DMRS index definition table may be applied as an index for generating a DMRS sequence.

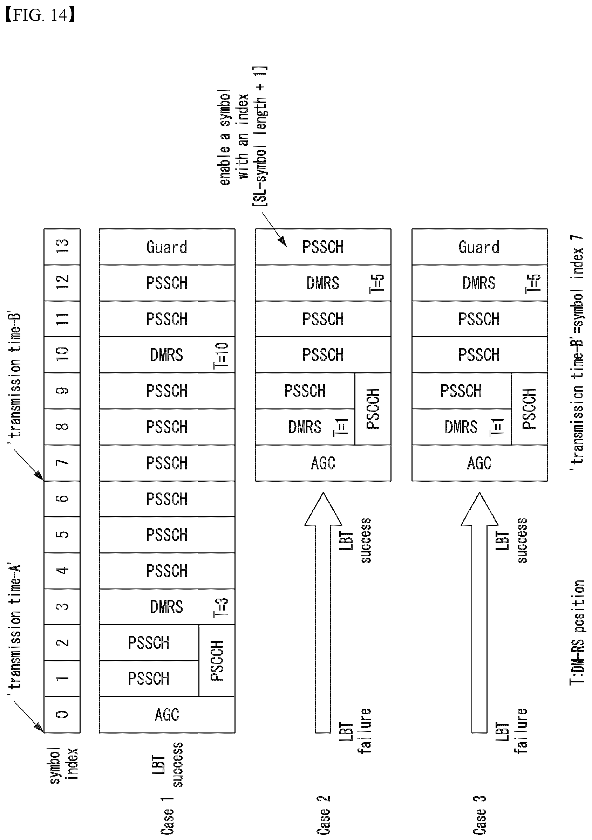

FIG. 14 is a conceptual diagram illustrating a first exemplary embodiment of time domain symbol configuration.

Referring to FIG. 14, the first case may be a case in which an LBT operation succeeds and may be a case where the SL-start symbol = 0 and the SL-symbol length = 13 are given as information on the transmission time-A. The information on the transmission time-A may be configured, and the transmission time-B may be configured, determined, or calculated as 7 in terms of symbol index. Here, the terminal may determine the symbol length for the transmission time -B as 6.

The second case may be a case in which an LBT operation fails. In the second case, the positions of DMRS may be 1 and 5. The positions of the DMRS may correspond to symbol indexes 8 and 12 within the slot. That is, the positions of the DMRS may be indexed by the indexes starting from a symbol for PSSCH/PSCCH transmission, including a copied symbol. In this case, values for generating a DMRS sequence may be defined as the same values as the position values, that is, 1 and 5. As another exemplary embodiment, the positions of DMRS may be calculated as index values to which N_{offset} is added. In this case, the positions of DMRS may be defined as 1 and 5. However, the values for generating the DMRS sequence may be defined as 7 and 12 obtained by adding N_{offset} to the positions of DMRS.

The third case may be a case that takes the symbol length of 6 and DMRS maintenance into consideration. SCI may include information indicating that the last symbol is used for PSSCH transmission. In this case, transmission symbols may be configured as in the second case. The receiving terminal may determine a TBS by considering this case. Using a symbol indicated as the last guard symbol for PSSCH transmission may be configured identically to the transmission at the transmission time-A. Here, configuring the last symbol to be used for PSSCH transmission may be done when a next slot of the slot wherein transmission is currently performed is scheduled to the same terminal.

This may be configured by the base station to the transmitting terminal through DCI. The transmitting terminal receiving the DCI may include the information in SCI for a PSSCH. The use of the last symbol for PSSCH transmission may be expressed by defining it as 'enabled' in the information.

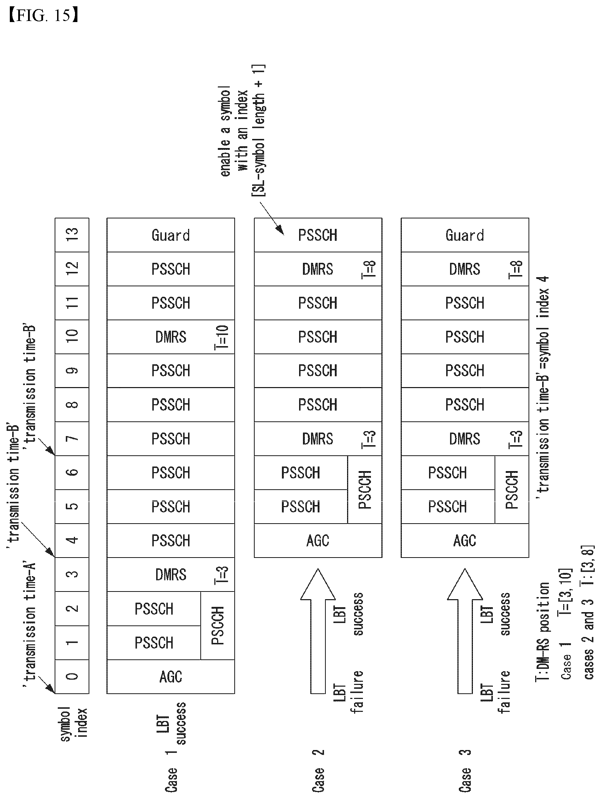

FIG. 15 is a conceptual diagram illustrating a second exemplary embodiment of time domain symbol configuration.

Referring to FIG. 15, the transmission time-B may be 4. The number of symbols for transmission according to the transmission time-B may be considered as 9. If PSSCH transmission in the last symbol is enabled, it may correspond to the case 2.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a first terminal, comprising:
configuring resource block (RB) sets each of which corresponds to a unit in which a listen-before-talk (LBT) bandwidth and a guard band are combined from a sidelink resource pool;
configuring a subchannel including two or more physical resource blocks (PRBs) from among a plurality of PRBs included in each of the RB sets;
generating sidelink control information including identification information of at least one scheduled subchannel among a plurality of subchannels configured in the RB sets; and
transmitting the sidelink control information to a second terminal.

2. The method according to claim 1, further comprising:
receiving, from a base station, information on the guard band, which includes at least one of information on index(es) of PRB(s) of the guard band or information on a number of the PRB(s) of the guard band in the resource pool; and
identifying a subchannel including the guard band based on the information on the guard band.

3. The method according to claim 2, further comprising, when the information on the guard band further includes information a number N_{GB} of PRBs included in the guard band,
when each of the RB sets includes N_{subch} subchannels, configuring PRBs included in subchannels indexed from 0 to (N_{subch} - N_{GB} - 1) to be used for transmission;
configuring one PRB in each of subchannels indexed from (N_{subch}-N_{GB}) to (N_{subch}-1) to be used as the guard band;
configuring the one PRB in each of the subchannels indexed from (N_{subch}-N_{GB}) to (N_{subch}-1) not to be used for transmission; and
calculating a transport block size (TBS) by considering the one PRB not used for transmission.

4. The method according to claim 3, wherein when a number of the PRBs excluded from the transmission is equal to or more than a predetermined number, the number of the PRBs excluded from the transmission is considered in calculating the TBS.

5. The method according to claim 1, wherein when the at least one scheduled subchannel is included in each of at least one RB set, the sidelink control information further includes information on whether to use the guard band for transmission.

6. The method according to claim 1, wherein when the at least one scheduled subchannel is included in each of at least one RB set, the first terminal assumes that data is transmitted as being punctured at PRB(s) of the guard band.

7. The method according to claim 1, further comprising:
performing a listen-before-talk (LBT) operation before transmitting a signal in a first slot of the at least one scheduled subchannel;
in response to that the LBT operation succeeds, transmitting a signal to the second terminal based on a first transmission time in the first slot; and
in response to that the LBT operation fails, transmitting a signal to the second terminal based on a second transmission time in the first slot,
wherein the first transmission time is a time of a symbol index indicated by sidelink start symbol information, and the second transmission time is a time obtained by adding an offset to the time of the symbol index indicated by the sidelink start symbol information.

8. The method according to claim 7, further comprising:
receiving, from a base station, information on a plurality of candidate start symbols; and
configuring information on a start symbol dynamically indicated by the base station from among the plurality of candidate start symbols as the sidelink start symbol information.

9. The method according to claim 7, wherein the second transmission time is at least one of a start time of transmission including an automatic gain control (AGC) symbol, a start time of a physical sidelink control channel (PSCCH)/physical sidelink shared channel (PSSCH), or a start time of an AGC symbol.

10. The method according to claim 1, further comprising determining a TBS by considering at least one of a sidelink symbol length, a number of physical sidelink feedback channel (PSFCH) symbols, a number of demodulation reference signal (DMRS) resource elements (REs), or a number of overhead REs.

11. The method according to claim 7, wherein when transmitting a second DMRS at the second transmission time, the first terminal transmits the second DMRS at a time obtained by adding an offset to a transmission time of the first DMRS transmitted at the first transmission time.

12. A first terminal comprising a processor,
wherein the processor causes the first terminal to perform:
configuring resource block (RB) sets each of which corresponds to a unit in which a listen-before-talk (LBT) bandwidth and a guard band are combined from a sidelink resource pool;
configuring a subchannel including two or more physical resource blocks (PRBs) from among a plurality of PRBs included in each of the RB sets;
generating sidelink control information including identification information of at least one scheduled subchannel among a plurality of subchannels configured in the RB sets; and
transmitting the sidelink control information to a second terminal.

13. The first terminal according to claim 12, wherein the processor further causes the first terminal to perform:
receiving, from a base station, information on the guard band, which includes at least one of information on index(es) of PRB(s) of the guard band or information on a number of the PRB(s) of the guard band in the resource pool; and
identifying a subchannel including the guard band based on the information on the guard band.

14. The first terminal according to claim 12, wherein the information on the guard band further includes information a number N_{GB} of PRBs included in the guard band, and the processor further causes the first terminal to perform:
when each of the RB sets includes N_{subch} subchannels, configuring PRBs included in subchannels indexed from 0 to (N_{subch} - N_{GB} - 1) to be used for transmission;
configuring one PRB in each of subchannels indexed from (N_{subch}-N_{GB}) to (N_{subch}-1) to be used as the guard band;
configuring the one PRB in each of the subchannels indexed from (N_{subch}-N_{GB}) to (N_{subch}-1) not to be used for transmission; and
calculating a transport block size (TBS) by considering the one PRB not used for transmission.

15. The first terminal according to claim 12, wherein the processor further causes the first terminal to perform:
performing a listen-before-talk (LBT) operation before transmitting a signal in a first slot of the at least one scheduled subchannel;
in response to that the LBT operation succeeds, transmitting a signal to the second terminal based on a first transmission time in the first slot; and
in response to that the LBT operation fails, transmitting a signal to the second terminal based on a second transmission time in the first slot,
wherein the first transmission time is a time of a symbol index indicated by sidelink start symbol information, and the second transmission time is a time obtained by adding an offset to the time of the symbol index indicated by the sidelink start symbol information.

16. The first terminal according to claim 15, wherein the processor further causes the first terminal to perform:
receiving, from a base station, information on a plurality of candidate start symbols; and
configuring information on a start symbol dynamically indicated by the base station from among the plurality of candidate start symbols as the sidelink start symbol information.

17. The first terminal according to claim 15, wherein the first terminal transmits a signal in a transmission resource of a guard symbol at a position obtained by adding 1 to a sidelink symbol length, when transmission continues in a second slot which is a next slot of the first slot.

18. The first terminal according to claim 17, wherein the first terminal informs the second terminal through the sidelink control information whether to use the guard symbol at the position obtained by adding 1 to the sidelink symbol length.
